# FASCICULE DE BREVET EUROPEEN

(11) **EP 4 630 945 B1**
(45) Date de publication et mention de la délivrance du brevet: **19.08.2026**
(21) Numéro de dépôt: 23821178.3
(22) Date de dépôt: 05.12.2023
(51) Int. Cl.: G06F 21/36, G06F 21/31, G06F 21/83

(54) **ENROLEMENT ET VERIFICATION D'UNE INFORMATION SECRETE**
ERFASSUNG UND VERIFIZIERUNG GEHEIMER INFORMATIONEN
ENROLMENT AND VERIFICATION OF SECRET INFORMATION

(30) Priorité: 07.12.2022 FR 2212916
(43) Date de publication de la demande: 15.10.2025
(73) Titulaire: Idakto SAS, 75016 Paris (FR)
(72) Inventeur: BERTHIER, Paul Edmond, 49460 Juigné (FR); LEU, Maxime, 49000 Angers (FR); CAUCHIE, Stéphane, 49240 Avrillé (FR)
(74) Mandataire: Pellegrini, Marie Claude
(86) Numéro de dépôt international: PCT/EP2023/084381
(87) Numéro de publication internationale: WO 2024/121169

(56) Documents cités:
- US-A1- 2011 191 591
- US-A1- 2018 276 366

## Description

La présente invention concerne un procédé d'enrôlement d'une information secrète tel qu'un code secret mis en œuvre dans un dispositif client, un procédé d'enrôlement d'une information secrète tel qu'un code secret mis en œuvre dans un dispositif serveur, un procédé d'acquisition et de vérification d'une information secrète, telle qu'un code secret, mis en œuvre dans un dispositif client, un procédé d'acquisition et de vérification d'une information secrète, telle qu'un code secret, mis en œuvre dans un dispositif serveur et un dispositif configuré pour mettre en œuvre l'un de ces procédés.

L'acquisition et la vérification d'une information secrète concerne par exemple, l'acquisition d'un code d'authentification d'un utilisateur en vue de vérifier son identité. La vérification de l'identité d'un utilisateur peut être réalisée par exemple dans le cas d'un contrôle d'accès, préalablement à la réalisation de transactions telles que des transactions de paiement, ou dans tout autre contexte nécessitant une vérification de l'identité d'un utilisateur.

Traditionnellement, l'authentification d'un utilisateur, autrement dit la vérification de l'identité de l'utilisateur, est réalisée par la saisie d'un mot de passe ou d'un code, aussi appelés "information secrète" ou "code d'authentification", tel qu'un code PIN, sur un dispositif particulier spécifiquement conçu pour la protection du code d'authentification saisi. L'utilisation d'un tel dispositif nécessite que l'utilisateur dispose d'une carte à puce mémorisant le code d'authentification de celui-ci et que cette carte à puce soit insérée dans le dispositif préalablement à la saisie du code d'authentification par l'utilisateur. Ce dispositif est apte à vérifier que le code d'authentification saisi est conforme au code d'authentification mémorisé dans la carte à puce de l'utilisateur. Un exemple d'un tel dispositif est un dispositif d'entrée de PIN (PED). Les dispositifs d'entrée de PIN (PED) sont particulièrement utilisés notamment dans le domaine bancaire et le domaine de la santé.

Ces dispositifs d'entrée de PIN (PED) doivent être approuvés conformément à des normes requises pour garantir qu'ils offrent une sécurité adéquate. Cette dernière se traduit par un certain nombre d'exigences de sécurité à remplir afin de garantir la confidentialité, l'intégrité et la disponibilité des données d'authentification de l'utilisateur.

Afin de remplir ces exigences, les dispositifs d'entrée de PIN sont équipés de fonctionnalités de sécurité matérielles pour garantir la sécurité des données d'authentification et des clés de chiffrement utilisées. Ces dispositifs d'entrée de PIN comprennent un clavier PIN permettant la saisie de valeurs numériques.

Selon ces dispositifs d'entrée de PIN, la protection du code d'authentification est principalement réalisée par des mécanismes matériels complétés par des logiciels spécifiques à ces dispositifs. Ces mécanismes peuvent aussi faire appel à des serveurs distants pour compléter la sécurité de ces dispositifs d'entrée de PIN. Cependant, les dispositifs d'entrée de PIN sont le plus souvent complets et autonomes assurant par eux-mêmes la protection des codes d'authentification saisis. En cas de détection d'une anomalie de fonctionnement du dispositif d'entrée de PIN, celui-ci est mis dans un état tel qu'il est rendu inutilisable et toutes les données sensibles du dispositif sont immédiatement effacées ou leur accès bloqué.

Ces dispositifs autonomes présentent donc un fort niveau de protection des codes d'authentification saisis et des données secrètes.

Des dispositifs électroniques, autres que les dispositifs d'entrée de PIN, sont aujourd'hui confrontés à la sécurisation de données d'identité d'un utilisateur et à l'authentification de ce dernier. Il s'agit notamment des téléphones portables, des tablettes, des ordinateurs, etc. En effet, il est de plus en plus souvent demandé de prouver son identité sur ces dispositifs électroniques notamment lors de l'utilisation de services sur Internet.

Dans de tels dispositifs électroniques, les solutions de sécurisation de données d'identité sont basées sur des solutions logicielles de saisie de code d'authentification permettant de traiter l'authentification d'un utilisateur. Ces solutions de sécurisation logicielles comprennent des mécanismes de sécurisation des données et des mécanismes de contrôle de la sécurité pour garantir la sécurité des données d'identité.

Ces mécanismes de sécurisation et de contrôle de la sécurité doivent être aptes à garantir que les mécanismes de sécurité du dispositif électronique sont intacts et opérationnels. En outre, ils doivent être aptes à détecter la présence d'anomalies, notifier les anomalies, alerter et prendre des mesures appropriées en cas de tentative d'interception du code d'authentification de l'utilisateur.

Ces mécanismes sont toutefois mis en œuvre par des logiciels spécifiques sur les plateformes matérielles et logicielles des dispositifs électroniques qui sont souvent peu fiables, ces logiciels spécifiques pouvant être directement exécutables ou être des ensembles d'instructions exécutables par une machine virtuelle. Etant donné le manque de fiabilité de ces plateformes, un tiers malveillant peut accéder aux logiciels qui s'exécutent sur les plateformes des dispositifs électroniques et avoir accès aux données secrètes d'authentification saisies.

Le document US 2018/276366 A1 porte sur un dispositif comprenant un terminal mobile et un serveur d'authentification d'identité, et enseigne comment soumettre de manière sécurisée des informations d'authentification utilisateur depuis le terminal vers le serveur à l'aide d'un clavier variable (clavier virtuel) généré de manière aléatoire par le serveur et envoyé au client.

Le document US 2011/191591 A1 enseigne l'utilisation d'une disposition de clavier virtuel aléatoire générée par le serveur afin de masquer les informations d'authentification utilisateur collectées et soumises par un client.

Le but de l'invention est de remédier aux inconvénients des techniques antérieures et de permettre d'une part l'enrôlement et d'autre part l'acquisition et la vérification sur un dispositif client d'une information secrète d'un utilisateur ou d'un système tiers, et de permettre d'une part l'enrôlement et d'autre part l'acquisition et la vérification de cette information secrète sur un dispositif serveur, tout en empêchant l'interception de cette information secrète par un tiers malveillant ayant le contrôle du dispositif serveur et des moyens de communication de ce dispositif.

Ce but est atteint par un procédé d'enrôlement d'une information secrète (p) comprenant N symboles parmi une pluralité b de symboles pouvant être acquis, mis en œuvre dans un dispositif client, le dispositif client ayant une pluralité N de clés secrètes client (sᵢ). Le procédé comprend les étapes suivantes :
- génération d'un nombre aléatoire client (α) ;
- génération de N données client (Tᵢ) à partir au moins du nombre aléatoire client (α) et de la pluralité N de clés secrètes client (sᵢ) ;
- envoi des N données client (Tᵢ) à un dispositif serveur ;
- réception d'un tableau de données élémentaires codées (V, VP) provenant dudit dispositif serveur, chaque donnée élémentaire (V_{i,j}, VP_{i,j}) codant un symbole pouvant être acquis (j) parmi la pluralité b de symboles pouvant être acquis, à une position i dans une information secrète pouvant être acquise ;
- affichage d'un clavier virtuel pour une acquisition d'une information secrète à enrôler, le clavier virtuel comprenant la pluralité b de symboles pouvant être acquis, les symboles étant affichées selon un ordre établi dans le tableau de données élémentaires codées ;
- acquisition sur le clavier virtuel, de N symboles (pᵢ), les N symboles acquis (pi) formant une information secrète à enrôler (p) ;
- génération d'une information secrète à enrôler codée (W) à partir des données élémentaires codées (V_{i,pi}) déterminées dans le tableau de données élémentaires codées pour chaque symbole acquis (pᵢ) formant l'information secrète à enrôler, en fonction du symbole acquis et de la position (i) de ce symbole dans l'information secrète à enrôler (p) ;
- génération d'une information secrète à enrôler codée partielle (C1) à partir de l'information secrète à enrôler codée (W) en utilisant le nombre aléatoire client (α) et
- envoi de l'information secrète à enrôler codée partielle (C1) au dispositif serveur pour être enrôlée.

Le procédé objet de l'invention permet l'utilisation d'un clavier virtuel pour l'acquisition d'une information secrète à enrôler. Le tableau de données élémentaires codées utilisé pour l'affichage du clavier virtuel, comprend, pour chaque symbole pouvant être acquis sur le clavier, une donnée élémentaire codant le symbole, le codage étant également dépendant de la position du symbole lors de la saisie de l'information secrète par l'utilisateur. L'information secrète à enrôler codée est déterminée par les symboles acquis et le tableau de données élémentaires. L'étape de génération d'une information secrète à enrôlée codée partielle permet d'ajouter un aléa à l'information secrète à enrôlée codée. Ainsi, si un tiers malveillant obtient l'information secrète à enrôlée codée partielle (par exemple, lors de sa transmission au dispositif serveur), il ne pourra pas déterminer les différents symboles formant l'information secrète.

Le tableau de données élémentaires codées peut être un tableau dont les éléments élémentaires ont été permutés afin que les données élémentaires codant les symboles pouvant être acquis j ne soient pas ordonnées.

Le procédé peut comprendre en outre :
- une étape de réception d'un identifiant d'utilisateur, d'une empreinte d'une information secrète à enrôler protégée et d'une signature provenant du dispositif serveur ; et
- une étape de mémorisation de l'identifiant d'utilisateur, de l'empreinte de l'information secrète à enrôler protégée et de signature afin d'enrôler l'information secrète.

Le procédé peut comprendre en outre,
- une étape de réception d'un tableau de masquage (Φ) provenant du dispositif serveur, chaque donnée du tableau de masquage étant un masquage d'un symbole pouvant être acquis j et de la position du symbole pouvant être acquis i ;
- une étape de génération d'une donnée de masquage partielle (C2) à partir du tableau de masquage (Φ), du symbole acquis j et de la position i du symbole acquis ;
- une étape d'envoi de la donnée de masquage partielle (C2) au dispositif serveur.

Le procédé peut dans ce cas comprendre en outre,
- une étape de réception d'un paramètre de données serveur (F) provenant du dispositif serveur ;
- une étape de génération d'un nombre aléatoire de masquage client (δ) ;
- une étape de génération d'une première donnée de masquage client (Δ) à partir d'un générateur (g) d'un groupe fini et du nombre aléatoire de masquage client (δ) ;
- une étape de génération d'une seconde donnée de masquage client (D) à partir du paramètre de données serveur (F) et du nombre aléatoire de masquage client (δ) ;
- l'étape de génération d'une information secrète à enrôler codée partielle (C1) est en outre réalisée à partir de la première donnée de masquage client (Δ) ; et
- l'étape de génération d'une donnée de masquage partielle (C2) est en outre réalisée à partir de la seconde donnée de masquage client (D).

L'information secrète à enrôler codée (W) peut être générée au moyen d'une fonction de multiplication des données élémentaires codées déterminées dans le tableau de données élémentaires codées (V, VP) pour chaque symbole acquis (pᵢ) formant l'information secrète à enrôler.

L'invention a également pour objet un procédé d'enrôlement d'une information secrète (p) comprenant N symboles parmi une pluralité b de symboles pouvant être acquis, mis en œuvre dans un dispositif serveur, le dispositif serveur comprenant une paire de clés comprenant une clé privée (h) et une clé publique (H). Le procédé comprend les étapes suivantes :
- réception de N données client (Tᵢ) provenant dudit dispositif client ;
- génération de N nombres aléatoires serveur (rᵢ) ;
- génération d'un tableau de données élémentaires codées (V, VP), chaque donnée élémentaire codée (V_{i,j}, VP_{i,j}) étant une représentation codée d'un symbole pouvant être acquis j parmi la pluralité b de symboles pouvant être acquis, à une position i dans une information secrète pouvant être acquise, la donnée élémentaire codée (V_{i,j}, VP_{i,j}) étant en outre dépendante au moins de la donnée client (Tᵢ) à la position i, de la clé publique (H) et du i-ème nombre aléatoire serveur (rᵢ) généré ;
- envoi du tableau de données élémentaires codées (V, VP) au dispositif client ;
- réception d'une information secrète à enrôler codée partielle (C1) provenant du dispositif client ;
- génération d'une donnée de vérification partielle (C0) en fonction au moins des N nombres aléatoires serveur (rᵢ) ;
- génération d'une information secrète à enrôler protégée (M) à partir de l'information secrète à enrôler codée partielle (C1), de la donnée de vérification partielle (C0) et de la clé privée (h) ;
- traitement de l'information secrète à enrôler protégée (M) afin d'enrôler l'information secrète.

Le procédé peut comprendre en outre une étape de permutation des données élémentaires codées du tableau de données élémentaires codées pour obtenir un tableau de données élémentaires codées permuté.

Le traitement de l'information secrète à enrôler protégée (M) peut comprendre une mémorisation de l'information secrète à enrôler protégée (M) afin d'enrôler l'information secrète.

Le dispositif serveur peut comprendre en outre une clé privée de hachage (Ks) et une clé privée de signature (SKs). Dans ce cas, le traitement de l'information secrète à enrôler protégée (M) peut comprendre :
- une étape de génération d'une empreinte de l'information secrète à enrôler protégée (M) à partir d'une fonction de hachage cryptographique, de la clé privée de hachage (Ks) et de l'information secrète à enrôler protégée (M) ;
- une étape de génération d'une signature à partir de la clé privée de signature (SKs), d'un identifiant d'un utilisateur et de l'empreinte générée ;
- une étape d'envoi au dispositif client, de l'identifiant de l'utilisateur, de l'empreinte générée et de la signature générée, afin d'enrôler l'information secrète.

Le procédé peut comprendre en outre :
- une étape de génération d'un tableau de masquage (Φ), chaque donnée du tableau de masquage étant déterminée à partir d'un symbole pouvant être acquis j, de la position du symbole pouvant être acquis i, d'un premier nombre aléatoire de masquage (γ) pour masquer le symbole pouvant être acquis j et d'un deuxième nombre aléatoire de masquage (β) et d'un troisième nombre aléatoire de masquage (f) pour masquer la position du symbole pouvant être acquis j ;
- une étape d'envoi du tableau de masquage (Φ) au dispositif client ;
- une étape de réception d'une donnée de masquage partielle (C2) provenant du dispositif client ;
- une étape de génération d'une donnée de démasquage (C) à partir de la donnée de masquage partielle (C2), du deuxième nombre aléatoire de masquage (β), du troisième nombre aléatoire de masquage (f) et du nombre b de symboles pouvant être acquis ;
- l'étape de génération d'une information secrète à enrôler protégée (M) est en outre réalisée à partir de la donnée de démasquage (C) et de la première donnée aléatoire de masquage (γ).

L'invention a également pour objet un procédé d'acquisition et de vérification d'une information secrète (p') comprenant N symboles parmi une pluralité b de symboles pouvant être acquis, mis en œuvre dans un dispositif client, le dispositif client ayant une pluralité N de clés secrètes client (sᵢ). Le procédé comprend les étapes suivantes :
- génération d'un nombre aléatoire client (α') ;
- génération de N données client (T'ᵢ) à partir au moins du nombre aléatoire client (α') et de la pluralité N de clés secrètes client (sᵢ) ;
- envoi des N données client (T'ᵢ) à un dispositif serveur ;
- réception d'un tableau de données élémentaires codées (V', VP') provenant dudit dispositif serveur, chaque donnée élémentaire (V'_{i,j}, VP'_{i,j}) codant un symbole pouvant être acquis (j) parmi la pluralité b de symboles pouvant être acquis, à une position i dans une information secrète pouvant être acquise ;
- affichage d'un clavier virtuel pour une acquisition d'une information secrète à vérifier, le clavier virtuel comprenant la pluralité b de symboles pouvant être acquis, les symboles étant affichées selon un ordre établi dans le tableau de données élémentaires codées ;
- acquisition sur le clavier virtuel, de N symboles (p'ᵢ), les N symboles acquis (p'i) formant l'information secrète à vérifier (p') ;
- génération d'une information secrète à vérifier codée (W') à partir des données élémentaires codées (V'_{i,pi}, VP'_{i,pi}) déterminées dans le tableau de données élémentaires codées pour chaque symbole acquis (p'ᵢ) formant l'information secrète à vérifier, en fonction du symbole acquis et de la position (i) de ce symbole dans l'information secrète à vérifier (p') ;
- génération d'une information secrète à vérifier codée partielle (C1') à partir de l'information secrète à vérifier codée (W') en utilisant le nombre aléatoire client (α') ;
- envoi de l'information secrète à vérifier codée partielle (C1') au dispositif serveur pour être vérifiée et
- réception d'une indication comprenant un résultat de la vérification en provenance du dispositif serveur.

Le tableau de données élémentaires codées peut être un tableau dont les éléments élémentaires ont été permutés afin que les données élémentaires codant les symboles pouvant être acquis j ne soient pas ordonnées.

Le dispositif client peut comprendre en outre un identifiant d'utilisateur, une empreinte d'une information secrète enrôlée protégée et une signature. Dans ce cas, Le procédé peut comprendre en outre, une étape d'envoi de l'identifiant d'utilisateur, de l'empreinte d'une information secrète enrôlée protégée et de la signature au dispositif serveur.

Le procédé peut comprendre en outre,
- une étape de réception d'un tableau de masquage (Φ') provenant du dispositif serveur, chaque donnée du tableau de masquage étant un masquage d'un symbole pouvant être acquis j et de la position du symbole pouvant être acquis i ;
- une étape de génération d'une donnée de masquage partielle (C2') à partir du tableau de masquage (Φ'), du symbole acquis j et de la position i du symbole acquis ;
- une étape d'envoi de la donnée de masquage partielle (C2') au dispositif serveur.

Dans ce cas, le procédé peut comprendre en outre :
- une étape de réception d'un paramètre de données serveur (F') provenant du dispositif serveur ;
- une étape de génération d'un nombre aléatoire de masquage client (δ') ;
- une étape de génération d'une première donnée de masquage client (Δ') à partir d'un générateur (g) d'un groupe fini et du nombre aléatoire de masquage client (δ') ;
- une étape de génération d'une seconde donnée de masquage client (D') à partir du paramètre de données serveur (F') et du nombre aléatoire de masquage client (δ') ;
- l'étape de génération d'une information secrète à vérifier codée partielle (C1') est en outre réalisée à partir de la première donnée de masquage client (Δ') ; et
- l'étape de génération d'une donnée de masquage partielle (C2') est en outre réalisée à partir de la seconde donnée de masquage client (D').

L'information secrète à vérifier codée (W') peut être générée au moyen d'une fonction de multiplication des données élémentaires déterminées dans le tableau de données élémentaires codées (V', VP') pour chaque symbole acquis (p'ᵢ) formant l'information secrète à vérifier.

L'invention a également pour objet un procédé d'acquisition et de vérification d'une information secrète (p') comprenant N symboles parmi une pluralité b de symboles pouvant être acquis, mis en œuvre dans un dispositif serveur, le dispositif serveur comprenant une paire de clés comprenant une clé privée (h) et une clé publique (H). Le procédé comprend les étapes suivantes :
- réception de N données client (T'ᵢ) provenant dudit dispositif client ;
- génération de N nombres aléatoires serveur (r'ᵢ) ;
- génération d'un tableau de données élémentaires codées (V', VP'), chaque donnée élémentaire codée (V'_{i,j}, VP'_{i,j}) étant une représentation codée d'un symbole pouvant être acquis j parmi la pluralité b de symboles pouvant être acquis, à une position i dans une information secrète pouvant être acquise, la donnée élémentaire codée (V'_{i,j}, VP'_{i,j}) étant en outre dépendante au moins de la donnée client (T'ᵢ) à la position i, de la clé publique (H) et du i-ème nombre aléatoire serveur (r'ᵢ) généré ;
- envoi du tableau de données élémentaires codées (V', VP') au dispositif client ;
- réception d'une information secrète à vérifier codée partielle (C1') provenant du dispositif client ;
- génération d'une donnée de vérification partielle (C0') en fonction au moins des N nombres aléatoires serveur (r'ᵢ) ;
- génération d'une information secrète à vérifier protégée (M') à partir de l'information secrète à vérifier codée partielle (C1'), de la donnée de vérification partielle (C0') et de la clé privée (h) ;
- vérification de la correspondance entre l'information secrète à vérifier protégée (M') et une information secrète enrôlée protégée (M), sans avoir accès à l'information secrète à vérifier protégée (M') ; et
- envoi d'une indication comprenant un résultat de la vérification au dispositif client.

Selon ce procédé, la vérification de la correspondance entre l'information secrète à vérifier protégée et l'information secrète enrôlée protégée peut être réalisée sans avoir accès à l'information secrète à vérifier en claire ni l'information secrète enrôlée en claire.

Le procédé peut comprendre en outre une étape de permutation des données élémentaires codées du tableau de données élémentaires codées pour obtenir un tableau de données élémentaires codées permuté.

Le dispositif serveur peut comprendre en outre une clé privée de hachage (Ks) et une clé publique de signature (PKs), et en ce que le procédé comprend en outre :
- une étape de réception d'un identifiant d'utilisateur, d'une empreinte d'une information secrète enrôlée protégée et d'une signature provenant du dispositif client ;
- une étape de vérification de la signature à partir de la clé publique de signature (PKs) et
- l'étape de vérification de la correspondance entre l'information secrète à vérifier protégée (M') et l'information secrète enrôlée protégée (M) comprend une étape de génération d'une empreinte de l'information secrète à vérifier protégée (M') à partir d'une fonction de hachage cryptographique, de la clé privée de hachage (Ks) et de l'information secrète à vérifier protégée (M') et une étape de comparaison de la correspondance entre l'empreinte de l'information secrète à vérifier protégée et l'empreinte de l'information secrète enrôlée protégée.

Le procédé peut comprendre en outre :
- une étape de génération d'un tableau de masquage (Φ'), chaque donnée du tableau de masquage étant déterminée à partir d'un symbole pouvant être acquis j, de la position du symbole pouvant être acquis i, d'un premier nombre aléatoire de masquage (γ') pour masquer le symbole pouvant être acquis j et d'un deuxième nombre aléatoire de masquage (β') et d'un troisième nombre aléatoire de masquage (f') pour masquer la position du symbole pouvant être acquis j ;
- une étape d'envoi du tableau de masquage (Φ') au dispositif client ;
- une étape de réception d'une donnée de masquage partielle (C2') provenant du dispositif client ;
- une étape de génération d'une donnée de démasquage (C') à partir de la donnée de masquage partielle (C2'), du deuxième nombre aléatoire de masquage (β'), du troisième nombre aléatoire de masquage (f') et du nombre b de symboles pouvant être acquis ;
- l'étape de génération d'une information secrète à vérifier protégée (M') est en outre réalisée à partir de la donnée de démasquage (C') et de la première donnée aléatoire de masquage (γ').

L'invention a également pour objet un dispositif configuré pour mettre en œuvre l'un des procédés précédemment décrit.

On va maintenant décrire des exemples de réalisation de la présente invention en référence aux figures annexées où les mêmes références désignent d'une figure à l'autre des éléments identiques ou fonctionnellement semblables :
[Fig.1] illustre un premier mode de réalisation d'un procédé d'enrôlement d'une information secrète mis en œuvre dans un dispositif client et un premier mode de réalisation d'un procédé d'enrôlement d'une information secrète mis en œuvre dans un dispositif serveur conformément à l'invention.
[Fig.2] illustre un premier mode de réalisation d'un procédé d'acquisition et de vérification d'une information secrète mis en œuvre dans un dispositif client et un premier mode de réalisation d'un procédé d'acquisition et de vérification d'une information secrète mis en œuvre dans un dispositif serveur, conformément à l'invention.
[Fig.3] illustre un deuxième mode de réalisation d'un procédé d'enrôlement d'une information secrète mis en œuvre dans un dispositif client et un deuxième mode de réalisation d'un procédé d'enrôlement d'une information secrète mis en œuvre dans un dispositif serveur conformément à l'invention.
[Fig.4] illustre un deuxième mode de réalisation d'un procédé d'acquisition et de vérification d'une information secrète mis en œuvre dans un dispositif client et un deuxième mode de réalisation d'un procédé d'acquisition et de vérification d'une information secrète mis en œuvre dans un dispositif serveur, conformément à l'invention.
[Fig.5] illustre un troisième mode de réalisation d'un procédé d'enrôlement d'une information secrète mis en œuvre dans un dispositif client et un troisième mode de réalisation d'un procédé d'enrôlement d'une information secrète mis en œuvre dans un dispositif serveur conformément à l'invention.
[Fig.6] illustre un troisième mode de réalisation d'un procédé d'acquisition et de vérification d'une information secrète mis en œuvre dans un dispositif client et un troisième mode de réalisation d'un procédé d'acquisition et de vérification d'une information secrète mis en œuvre dans un dispositif serveur, conformément à l'invention.
[Fig.7], il est décrit la structure d'un dispositif client et d'un dispositif serveur configurés pour mettre en œuvre les procédés selon l'invention.

La présente invention concerne une manière sûre et fiable de réaliser d'une part un enrôlement d'une information secrète d'un utilisateur, et d'autre part, une acquisition et une vérification d'une information secrète saisie par un utilisateur, mis en œuvre dans un dispositif client et un dispositif serveur. En particulier, l'invention concerne un procédé d'enrôlement et un procédé d'acquisition et de vérification d'une information secrète, mis en œuvre dans un dispositif client, tel qu'un téléphone mobile, un ordinateur ou une tablette, de sorte à protéger l'information secrète à vérifier et empêcher son interception. L'invention concerne aussi un procédé d'enrôlement et un procédé d'acquisition et de vérification d'une information secrète, mis en œuvre dans un dispositif serveur de sorte à protéger l'information secrète et empêcher son interception.

Le dispositif client peut être tout type de dispositif, tel qu'un téléphone portable, une tablette, un ordinateur, etc., lequel comprend une plateforme matérielle et logicielle sur laquelle s'exécutent des logiciels, ces logiciels étant soit directement exécutables soit interprétés sur une machine virtuelle.

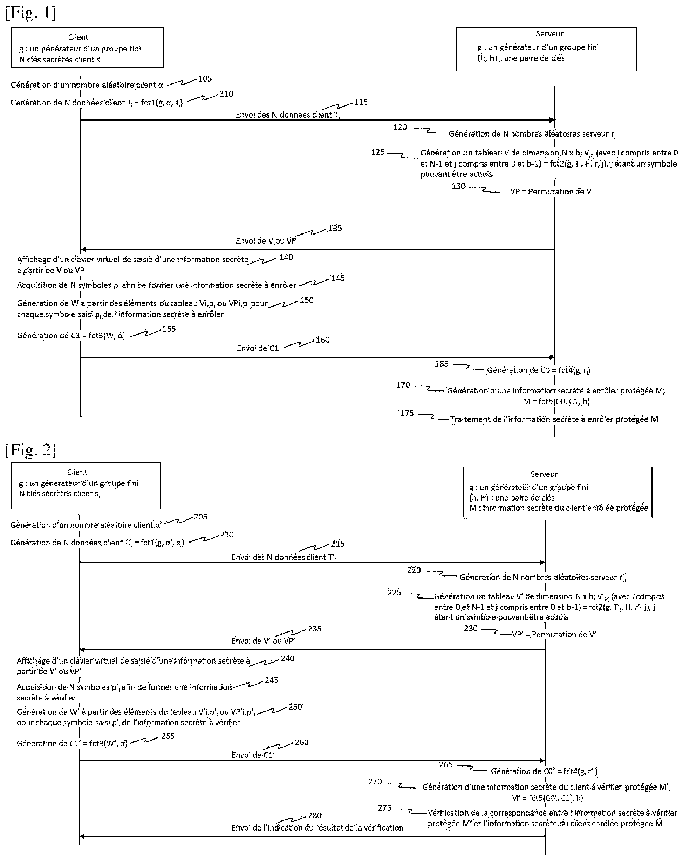

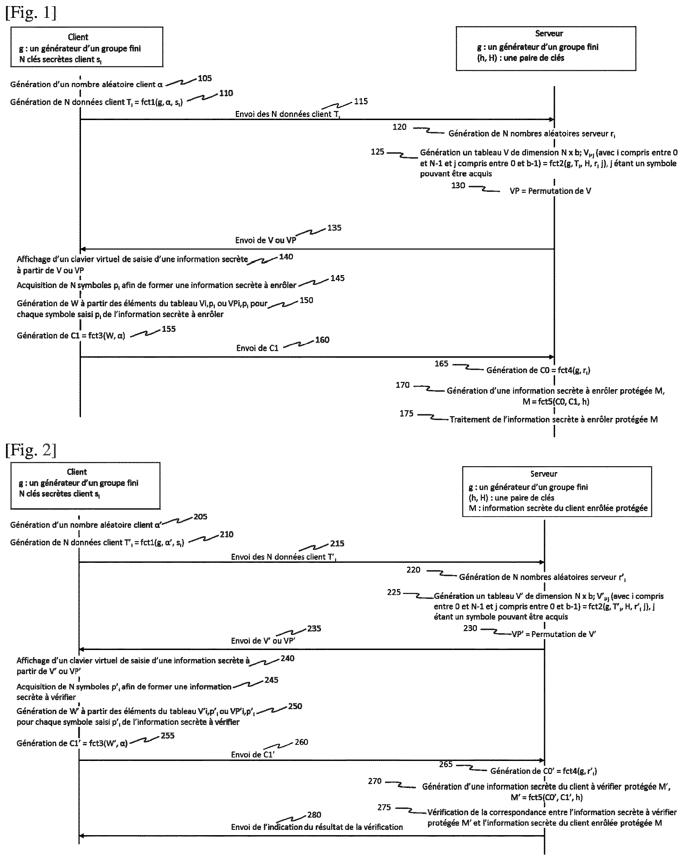

En référence à la [Fig.1], il est illustré un premier mode de réalisation d'un procédé d'enrôlement d'une information secrète mis en œuvre dans un dispositif client et un premier mode de réalisation d'un procédé d'enrôlement d'une information secrète mis en œuvre dans un dispositif serveur. L'information secrète devant être enrôlée comprend N symboles.

Les symboles peuvent être des caractères numériques ou des caractères alphanumériques avec ou sans les caractères de ponctuation. Les symboles peuvent également être des images, des icônes, des signes pour réaliser un motif, une séquence vidéo comprenant des objets visuels pouvant être sélectionnés, ou des mots pouvant former une phrase.

Le dispositif client peut comprendre au moins une clé secrète client S. A partir de la clé secrète client S, une pluralité N de clés secrètes client sᵢ peuvent être générées, N étant la longueur de l'information secrète devant être enrôlée. En outre, le dispositif client peut comprendre un générateur d'un groupe fini g, par exemple d'au moins 2^{L}, L étant un paramètre de sécurité.

Le générateur g est une donnée publique partagée, notamment avec le dispositif serveur.

Le dispositif serveur comprend une paire de clés comprenant une clé privée h et une clé publique H. Le dispositif serveur peut également comprendre le générateur d'un groupe fini g. Selon un mode de réalisation particulier, la clé publique H peut être générée à partir du générateur g et de la clé privée h, notamment au moyen de la fonction mathématique g^{h}.

Tel qu'illustré, le procédé débute par une étape de génération d'un nombre aléatoire client α (étape 105). Le nombre aléatoire est généré à chaque exécution du procédé d'enrôlement d'une information secrète.

A l'issue de l'étape 105, le procédé se poursuit sur le dispositif client par une étape de génération d'une pluralité N de données client Tᵢ (étape 110). La génération des données client Tᵢ est réalisée à partir au moins du nombre aléatoire client α et de la pluralité N de clés secrètes client sᵢ. Cette étape permet de créer un paramètre permettant un premier niveau de masquage des symboles qui seront acquis pour former une information secrète à enrôler.

Selon un mode de réalisation particulier, chaque donnée client Tᵢ peut être générée à partir du générateur de nombre fini g, le nombre aléatoire client α et la clé secrète client sᵢ. Selon un mode de réalisation, chaque donnée client Tᵢ peut être générée au moyen d'une fonction mathématique fct1 ayant comme paramètres, le générateur de nombre fini g, le nombre aléatoire client α et la clé secrète client sᵢ. En particulier, chaque donnée client Tᵢ peut être déterminée selon la formule mathématique suivante : Tᵢ = g^{si}g^{α}.

L'étape 110 est suivie d'une étape 115 d'envoi des N données client Tᵢ du dispositif client au dispositif serveur. En particulier, les N données client Tᵢ sont envoyées notamment de manière ordonnée.

Après réception par le dispositif serveur des données client Tᵢ provenant du dispositif client, le dispositif serveur peut générer N nombres aléatoires serveur rᵢ (étape 120).

A l'issue de l'étape 120, le dispositif serveur peut générer un tableau de données élémentaires codées V, chaque donnée élémentaire codée V_{i,j}, étant une représentation codée d'un symbole pouvant être acquis j parmi la pluralité b de symboles pouvant être acquis, à une position i dans une information secrète pouvant être acquise. La donnée élémentaire V_{i,j} est en outre dépendante de la donnée client Tᵢ à la position i, de la clé publique H et du i-ème nombre aléatoire serveur rᵢ généré (étape 125).

Un nouveau tableau de données élémentaires codées est généré à chaque exécution du procédé d'enrôlement d'une information secrète.

Le tableau de données élémentaires codées V est de dimension N par b, N étant le nombre de symboles de l'information secrète et b étant le nombre de symboles pouvant être acquis.

Pour chaque donnée élémentaire du tableau V, une fonction mathématique fct2 peut être appliquée pour déterminer la valeur de la donnée élémentaire. En particulier, chaque donnée élémentaire Vᵢ,ⱼ (avec i compris entre 0 et N-1 et j compris entre 0 et b-1) peut être déterminée par une fonction mathématique fct2 ayant comme paramètres le générateur g, la donnée client Tᵢ, le nombre aléatoire serveur rᵢ et le symbole pouvant être acquis j. Selon un mode de réalisation particulier,
*V*_{*i,π*(*j*)} = *TᵢH^{ri}ᵢ***g*^{*j*×*b*ⁱ}|*i* ∈ [*N*], *j* ∈ [*b*] avec Tᵢ qui est la composante aléatoire du dispositif client, H^{ri} qui est la composante aléatoire pour l'enrôlement pour le tableau de données élémentaires et *g^{j×b^{ï}}* qui est un calcul basé sur le symbole pouvant être acquis j et b qui est le nombre de symboles pouvant être acquis. Ainsi, le symbole de l'information secrète est masqué par la donnée client Tᵢ et par H^{ri}.

L'étape 125 peut être suivie d'une étape de permutation du tableau de données élémentaires codées V afin d'obtenir un tableau de données élémentaires codées permuté VP (étape 130). Ainsi, les données élémentaires codant les symboles pouvant être acquis j ne sont pas ordonnées selon les symboles j mais désordonnées.

Le procédé se poursuit par l'envoi du tableau de données élémentaires codées V ou VP du dispositif serveur au dispositif client (étape 135).

Le dispositif client obtient alors un tableau de données élémentaires codées V, VP provenant dudit dispositif serveur, chaque donnée élémentaire V_{i,j}, VP_{i,j} codant un symbole pouvant être acquis j parmi la pluralité b de symboles pouvant être acquis, à une position i dans une information secrète pouvant être acquise.

Le dispositif client affiche alors un clavier virtuel pour une acquisition d'une information secrète à enrôler (étape 140). L'affichage du clavier virtuel peut être réalisé au moyen d'une interface graphique comprenant un clavier virtuel apte à être affiché sur un moyen d'affichage du dispositif client, l'interface graphique comprenant l'ensemble des symboles pouvant être combinés afin de former une information secrète à enrôler. Le clavier virtuel comprend la pluralité b de symboles pouvant être acquis. Les symboles du clavier virtuel étant déterminés à partir du tableau de données élémentaires codées V ou du tableau de données élémentaires codées permuté VP.

Selon un mode de réalisation particulier, le clavier virtuel pour une acquisition d'une information secrète comprend l'affichage de la pluralité b de symboles pouvant être acquis selon l'ordonnancement déterminé dans le tableau de données élémentaires codées V ou dans le tableau de données élémentaires codées permuté VP.

Le procédé se poursuit sur le dispositif client par une étape d'acquisition sur le clavier virtuel, de N symboles pᵢ, les N symboles acquis pᵢ formant ensemble une information secrète à enrôler p (étape 145). Selon un mode de réalisation, l'utilisateur du dispositif client sélectionne N symboles pᵢ formant l'information secrète à enrôler en fonction des touches sélectionnées du clavier virtuel *π*(*pᵢ*)_{*i*∈[*N*]}. L'information secrète à enrôler p est notamment déterminée de la manière suivante : $p = {\sum }_{i = 0}^{N - 1} {p}_{i} {b}^{i}$.

L'étape 145 est suivie d'une étape de génération sur le dispositif client d'une information secrète à enrôler codée W à partir des données élémentaires codées V_{i,pi} ou VP_{i,pi} déterminées dans le tableau de données élémentaires codées pour chaque symbole acquis pᵢ formant l'information secrète à enrôler, en fonction du symbole acquis et de la position i de ce symbole dans l'information secrète à enrôler p (étape 150).

Selon un mode de réalisation, l'information secrète à enrôler codée W est générée au moyen d'une fonction de multiplication des données élémentaires codées déterminées dans le tableau de données élémentaires codées V, VP pour chaque symbole acquis pᵢ formant l'information secrète à enrôler. Ainsi, l'information secrète à enrôler codée W peut être générée au moyen de la fonction mathématique suivante : $W = {\prod }_{i = 1}^{N} {V}_{i , π \left({p}_{i}\right)}$.

L'étape 150 est suivie d'une étape de génération sur le dispositif client d'une information secrète à enrôler codée partielle C1 à partir de l'information secrète à enrôler codée W et le nombre aléatoire client α (étape 155). L'étape de génération d'une information secrète à enrôler codée partielle permet d'ajouter un aléa à l'information secrète à enrôler codée W. Ainsi, si un tiers malveillant obtient l'information secrète à enrôler codée partielle (par exemple, lors de sa transmission au dispositif serveur), il ne pourra pas déterminer les différents symboles formant l'information secrète.

Selon un mode de réalisation particulier, l'information secrète à enrôler codée partielle C1 peut être générée au moyen d'une fonction mathématique fct3, par exemple, la fonction mathématique suivante : ${C}_{1} = \frac{W}{{g}^{Na}}$*.* L'information secrète à enrôler codée partielle C1 est l'une des composantes du chiffrement El Gamal.

L'étape 155 est suivie d'une étape 160 d'envoi du dispositif client au dispositif serveur de l'information secrète à enrôler codée partielle C1.

Le dispositif serveur reçoit alors une information secrète à enrôler codée partielle C1 en provenance du dispositif client.

Le dispositif serveur génère alors une donnée de vérification partielle C0 en fonction des N nombres aléatoires serveur rᵢ (étape 165). En particulier, la donnée de vérification partielle C0 peut en outre être générée à partir d'un générateur g d'un groupe fini. La donnée de vérification partielle C0 peut alors être générée au moyen de la fonction mathématique fct4 suivante : *C*₀ = *g^{r},* r étant issu des N nombres aléatoires serveur rᵢ. La donnée de vérification partielle C0 est une autre des composantes du chiffrement El Gamal.

L'étape 165 est suivie d'une étape de génération d'une information secrète à enrôler protégée M sur le dispositif serveur, à partir de l'information secrète à enrôler codée partielle C1, de la donnée de vérification partielle C0 et de la clé privée h (étape 170). Cette opération permet d'obtenir l'information secrète à enrôler protégée sans avoir accès à l'information secrète à enrôler en claire. L'information secrète à enrôler protégée M peut être générée au moyen de la fonction mathématique fct5 suivante : $M = {C}_{1} / {C}_{0}^{h} .$

L'étape 170 est suivie d'une étape de traitement de l'information secrète à enrôler protégée M sur le dispositif serveur afin d'enrôler l'information secrète (étape 175).

Selon un premier mode de réalisation, le traitement de l'information secrète à enrôler protégée M comprend la mémorisation de l'information secrète à enrôler protégée M.

Selon un autre mode de réalisation particulier, le traitement de l'information secrète à enrôler protégée M comprend l'application d'une fonction de hachage sur l'information secrète à enrôler codée M (H(M)) et le résultat de la fonction de hachage est mémorisé dans le dispositif serveur au lieu de l'information secrète à enrôler protégée M.

Selon encore un autre mode de réalisation, le traitement de l'information secrète à enrôler protégée M comprend l'application d'une fonction de hachage cryptographique utilisant une clé privée de hachage Ks, sur l'information secrète à enrôler protégée M (HMAC[Ks](M)) et le résultat de la fonction de hachage cryptographique est mémorisé dans le dispositif serveur au lieu de l'information secrète à enrôler protégée.

Selon encore un autre mode de réalisation, le dispositif serveur comprend en outre une clé privée de hachage Ks et une clé privée de signature SKs. Dans ce mode de réalisation, le traitement de l'information secrète à enrôler protégée M comprend une étape de génération d'une empreinte de l'information secrète à enrôler protégée M à partir d'une fonction de hachage cryptographique, de la clé privée de hachage Ks et de l'information secrète à enrôler protégée M, une étape de génération d'une signature à partir de la clé privée de signature du dispositif serveur SKs, d'un identifiant d'un utilisateur et de l'empreinte générée et une étape d'envoi au dispositif client, de l'identifiant de l'utilisateur, de l'empreinte générée et de la signature générée.

Dans ce mode de réalisation, le dispositif client reçoit un identifiant d'utilisateur, une empreinte d'une information secrète à enrôler protégée et une signature provenant du dispositif serveur et une étape de mémorisation de l'identifiant d'utilisateur, de l'empreinte de l'information secrète à enrôler protégée et de la signature afin d'enrôler l'information secrète.

En référence à la [Fig.2], il est illustré un premier mode de réalisation d'un procédé d'acquisition et de vérification d'une information secrète mis en œuvre dans un dispositif client et un premier mode de réalisation d'un procédé d'acquisition et de vérification d'une information secrète mis en œuvre dans un dispositif serveur. L'information secrète devant être acquise et vérifiée comprend N symboles.

Les symboles peuvent être des caractères numériques ou des caractères alphanumériques avec ou sans les caractères de ponctuation. Les symboles peuvent également être des images, des icônes, des signes pour réaliser un motif, une séquence vidéo comprenant des objets visuels, ou des mots pouvant former une phrase.

Ces procédés peuvent faire suite aux précédés d'enrôlement précédemment décrits au regard de la [Fig.1]. L'objet de ces procédés est de vérifier la correspondance entre l'information secrète acquise par un utilisateur et une information secrète protégée précédemment enrôlée afin par exemple d'autoriser un accès ou d'autoriser une opération si la correspondance est validée.

Le dispositif client peut comprendre au moins une clé secrète client S. A partir de la clé secrète client S, une pluralité N de clés secrètes client sᵢ peuvent être générées, N étant la longueur de l'information secrète devant être vérifiée. En outre, le dispositif client peut comprendre un générateur d'un groupe fini g, par exemple d'au moins 2^{L}, L étant un paramètre de sécurité. Le dispositif client ayant exécuté le procédé de la [Fig.1] préalablement à l'exécution du procédé d'acquisition et de vérification d'une information secrète dispose de la clé secrète client S et/ou de la pluralité de clés secrètes client.

Le générateur g est une donnée publique partagée, notamment avec le dispositif serveur.

Le dispositif serveur peut comprendre une paire de clés incluant une clé privée h et une clé publique H. Le dispositif serveur peut également comprendre le générateur d'un groupe fini g. Selon un mode de réalisation particulier, la clé publique H peut être générée à partir du générateur g et de la clé privée h, notamment au moyen de la fonction mathématique g^{h}. La paire de clés correspond à la paire de clés du procédé d'enrôlement décrit au regard de la [Fig.1].

Tel qu'illustré, le procédé débute par une étape de génération d'un nombre aléatoire client α' (étape 205). Le nombre aléatoire est généré à chaque exécution du procédé d'acquisition et de vérification d'une information secrète.

A l'issue de l'étape 205, le procédé se poursuit sur le dispositif client par une étape de génération d'une pluralité N de données client T'ᵢ (étape 210). La génération des données client T'ᵢ est réalisée à partir au moyen du nombre aléatoire client α' et de la pluralité N de clés secrètes client sᵢ. Cette étape permet de créer un paramètre permettant un premier niveau de masquage des symboles qui seront acquis pour former l'information secrète à vérifier.

Selon un mode de réalisation particulier, chaque donnée client T'ᵢ peut être générée à partir du générateur de nombre fini g, le nombre aléatoire client α' et la clé secrète client sᵢ. Selon un mode de réalisation, chaque donnée client T'ᵢ est générée au moyen d'une fonction mathématique fct1 ayant comme paramètres, le générateur de nombre fini g, le nombre aléatoire client α' et la clé secrète client sᵢ. En particulier, chaque donnée client T'ᵢ peut être déterminée selon la formule mathématique suivante :${T}_{i} = {g}^{si} {g}^{α '} .$

L'étape 210 est suivie d'une étape 215 d'envoi des N données client T'ᵢ du dispositif client au dispositif serveur. En particulier, les N données client T'ᵢ sont envoyées, par exemple de manière ordonnée.

Après réception par le dispositif serveur des données client T'ᵢ provenant du dispositif client, le dispositif serveur génère N nombres aléatoires serveur r'ᵢ (étape 220).

A l'issue de l'étape 220, le dispositif serveur génère un tableau de données élémentaires codées V', chaque donnée élémentaire codée V'_{i,j}, étant une représentation codée d'un symbole pouvant être acquis j parmi la pluralité b de symboles pouvant être acquis, à une position i dans une information secrète pouvant être acquise. La donnée élémentaire V'_{i,j} est en outre dépendante de la donnée client T'ᵢ à la position i, de la clé publique H et du i-ème nombre aléatoire serveur rᵢ généré (étape 225).

Un nouveau tableau de données élémentaires codées est généré à chaque exécution du procédé d'acquisition et de vérification d'une information secrète.

Le tableau de données élémentaires codées V' est de dimension N par b, N étant le nombre de symboles de l'information secrète et b étant le nombre de symboles pouvant être acquis.

Pour chaque donnée élémentaire du tableau V', une fonction mathématique fct2, précédemment décrite, peut être appliquée pour déterminer la valeur de la donnée élémentaire. En particulier, chaque donnée élémentaire V'ᵢ,ⱼ (avec i compris entre 0 et N-1 et j compris entre 0 et b-1) peut être déterminée par une fonction mathématique fct2 ayant comme paramètres le générateur g, la donnée client T'ᵢ, le nombre aléatoire serveur r'ᵢ et le symbole pouvant être acquis j. Selon un mode de réalisation particulier, *V'*_{*i,π*(*j*)} *= T'ᵢH^{r'i}ᵢ*g^{j×bⁱ}*|*i* ∈ [*N*], *j* ∈ [*b*] avec T'ᵢ qui est la composante aléatoire du dispositif client, H^{r'i} qui est la composante aléatoire pour ce tableau de données élémentaires codées et *g*^{*j*×*b*ⁱ} qui est un calcul basé sur le symbole pouvant être acquis j et b qui est le nombre de symboles pouvant être acquis. Ainsi, le symbole de l'information secrète est masqué par la donnée client T'ᵢ et par H^{r'i}.

L'étape 225 peut être suivie d'une étape de permutation du tableau de données élémentaires codées V' afin d'obtenir un tableau de données élémentaires codées permuté VP' (étape 230). Ainsi, les données élémentaires codant les symboles pouvant être acquis j ne sont pas ordonnées selon les symboles j mais désordonnées.

Le procédé se poursuit par l'envoi du tableau de données élémentaires codées V', VP' du dispositif serveur au dispositif client (étape 235).

Le dispositif client obtient alors un tableau de données élémentaires codées V', VP' provenant dudit dispositif serveur, chaque donnée élémentaire V'_{i,j}, VP'_{i,j} codant un symbole pouvant être acquis j parmi la pluralité b de symboles pouvant être acquis, à une position i dans une information secrète pouvant être acquise.

Le dispositif client affiche alors un clavier virtuel pour l'acquisition d'une information secrète à vérifier (étape 240). L'affichage du clavier virtuel peut être réalisé au moyen d'une interface graphique comprenant un clavier virtuel apte à être affiché sur un moyen d'affichage du dispositif client, l'interface graphique comprenant l'ensemble des symboles pouvant être combinés afin de former une information secrète à vérifier. Le clavier virtuel comprend la pluralité b de symboles pouvant être acquis. Les symboles du clavier virtuel étant déterminés à partir du tableau de données élémentaires codées V' ou du tableau de données élémentaires codées permuté VP'.

Selon un mode de réalisation particulier, le clavier virtuel pour une acquisition d'une information secrète comprend l'affichage de la pluralité b de symboles pouvant être acquis selon l'ordonnancement déterminé dans le tableau de données élémentaires codées V' ou dans le tableau de données élémentaires codées permuté VP'.

Le procédé se poursuit sur le dispositif client par une étape d'acquisition sur le clavier virtuel, de N symboles p'ᵢ, les N symboles acquis p'ᵢ formant ensemble une information secrète à vérifier p' (étape 245). Selon un mode de réalisation, l'utilisateur du dispositif client sélectionne N symboles p'ᵢ formant l'information secrète à vérifier en fonction des touches sélectionnées du clavier virtuel *π*(*p'ᵢ*)_{*i*∈[*N*]}. L'information secrète à vérifier p' est notamment déterminée de la manière suivante : $p ′ = {\sum }_{i = 0}^{N - 1} p {′}_{i} {b}^{i}$*.*

L'étape 245 est suivie d'une étape de génération sur le dispositif client d'une information secrète à vérifier codée W' à partir des données élémentaires codées V'_{i,pi} ou VP'_{i,pi} déterminées dans le tableau de données élémentaires codées pour chaque symbole acquis p'ᵢ formant l'information secrète à vérifier, en fonction du symbole acquis et de la position i de ce symbole dans l'information secrète à vérifier p' (étape 250).

Selon un mode de réalisation, l'information secrète à vérifier codée W' est générée au moyen d'une fonction de multiplication des données élémentaires codées déterminées dans le tableau de données élémentaires codées V', VP' pour chaque symbole acquis p'ᵢ formant l'information secrète à vérifier. Ainsi, l'information secrète à vérifier codée W' peut être générée au moyen de la fonction mathématique suivante : $W ′ = {\prod }_{i = 1}^{N} V {′}_{i , π \left({p}_{′ i}\right)} .$

L'étape 250 est suivie d'une étape de génération sur le dispositif client d'une information secrète à vérifier codée partielle C1' à partir de l'information secrète à vérifier codée W' et le nombre aléatoire client α' (étape 255). Selon un mode de réalisation particulier, l'information secrète à vérifier codée partielle C1' peut être générée au moyen de la fonction mathématique fct3 précédemment décrite : ${C}_{1} ′ = \frac{W ′}{{g}^{Na ′}}$. L'information secrète à vérifier codée partielle C1' est l'une des composantes du chiffrement El Gamal.

L'étape 255 est suivie d'une étape 260 d'envoi du dispositif client au dispositif serveur de l'information secrète à vérifier codée partielle C1'.

Le dispositif serveur reçoit alors une information secrète à vérifier codée partielle C1' en provenance du dispositif client.

Le dispositif serveur génère alors une donnée de vérification partielle C0' en fonction des N nombres aléatoires serveur r'ᵢ (étape 265). En particulier, la donnée de vérification partielle C0' peut en outre être générée à partir d'un générateur g d'un groupe fini. La donnée de vérification partielle C0' peut alors être générée au moyen de la fonction mathématique fct4, précédemment décrite, suivante : *C*₀*'* = *g^{r'}*, r' étant issu des N nombres aléatoires serveur r'ᵢ. La donnée de vérification partielle C0' est une autre des composantes du chiffrement El Gamal.

L'étape 265 est suivie d'une étape de génération d'une information secrète à vérifier protégée M' sur le dispositif serveur, à partir de l'information secrète à vérifier codée partielle C1' au moyen de la donnée de vérification partielle C0' et de la clé privée h (étape 270). Cette opération permet d'obtenir l'information secrète à vérifier protégée sans avoir accès à l'information secrète en claire. L'information secrète à vérifier protégée M' peut être générée au moyen de la fonction mathématique fct5, précédemment décrite, suivante : $M ′ = {C}_{1} ′ / {C}_{0}^{′ h}$.

L'étape 270 est suivie d'une étape de vérification de la correspondance entre l'information secrète à vérifier protégée M' avec l'information secrète protégée M précédemment enrôlée, sans avoir accès à l'information secrète à vérifier (étape 275). Ainsi, la vérification de la correspondance peut être réalisée sans avoir accès à l'information secrète à vérifier en claire ni l'information secrète enrôlée en claire.

L'étape 275 est suivie d'une étape d'envoi d'une indication du résultat de la vérification au dispositif client (étape 280).

Le dispositif client reçoit alors une indication du résultat de la correspondance entre l'information secrète à vérifier et l'information secrète enrôlée. S'il y a correspondance entre l'information secrète à vérifier protégée M' et l'information secrète protégée M précédemment enrôlée alors l'authentification de l'utilisateur est validée et l'indication du résultat indique par exemple que l'authentification est correcte. Dans le cas contraire, l'authentification de l'utilisateur n'a pas pu être validée et l'indication du résultat peut comprendre un message d'erreur de la vérification.

Selon un mode de réalisation particulier, le dispositif serveur comprend le résultat d'une fonction de hachage appliquée à l'information secrète enrôlée protégée M (H(M)). Dans ce cas, préalablement à l'étape de vérification de la correspondance, il est appliqué la fonction de hachage à l'information secrète à vérifier protégée M' et la vérification de la correspondance est réalisée à partir du résultat de la fonction de hachage réalisée sur l'information secrète à vérifier protégée et de l'information secrète enrôlée protégée.

Selon un autre mode de réalisation, le dispositif serveur comprend le résultat d'une fonction de hachage cryptographique utilisant une clé privée de hachage Ks et l'information secrète à enrôler protégée M (HMAC[Ks](M)) réalisée lors de l'enrôlement de l'information secrète. Dans ce cas, préalablement à l'étape de vérification de la correspondance, il est appliqué la fonction de hachage cryptographique utilisant la clé privée de hachage Ks à l'information secrète à vérifier protégée M' et la vérification de la correspondance est réalisée à partir du résultat de la fonction de hachage cryptographique réalisée sur l'information secrète à vérifier protégée et de l'information secrète enrôlée protégée.

Selon encore un autre mode de réalisation dans lequel le dispositif client a mémorisé un identifiant d'utilisateur, une empreinte d'une information secrète enrôlée protégée et une signature, le procédé mis en œuvre sur le dispositif client comprend une étape d'envoi de l'identifiant d'utilisateur, de l'empreinte de l'information secrète enrôlée protégée et de la signature. Le dispositif serveur reçoit alors un identifiant d'utilisateur, une empreinte d'une information secrète enrôlée protégée et une signature provenant du dispositif client. Le procédé sur le dispositif serveur se poursuit alors par une étape de vérification de la signature à partir d'une clé publique de signature PKs et l'étape de vérification de la correspondance entre l'information secrète à vérifier protégée M' et l'information secrète enrôlée protégée M comprend une étape de génération d'une empreinte de l'information secrète à vérifier protégée M' à partir d'une fonction de hachage cryptographique, d'une clé privée de hachage Ks et de l'information secrète à vérifier protégée M' et une étape de comparaison de la correspondance entre l'empreinte de l'information secrète à vérifier protégée et l'empreinte d'une information secrète enrôlée protégée.

Le nombre de tentative de saisie et de vérification d'une information secrète ayant échoué est fixé afin d'assurer une sécurité de l'authentification. Ainsi, si le nombre de tentative de saisie et de vérification atteint un seuil donné, alors l'utilisateur ne peut plus saisir son information secrète et une procédure de déblocage est souvent mise en œuvre pour débloquer l'information secrète. Dans le dernier mode de réalisation, le dispositif serveur peut vérifier si le nombre de tentative de saisie et de vérification d'une information secrète ayant échoué a atteint un seuil donné. Pour cela, la signature peut ou outre être générée par le dispositif serveur à partir d'une liste de révocation. Ainsi, lorsqu'il reçoit du client une signature, le dispositif serveur peut vérifier que le nombre de tentative de saisie et de vérification n'a pas atteint un seuil donné et mettre à jour la liste de révocation.

Selon encore un autre mode de réalisation, le dispositif client peut comprendre une paire de clés de traitement, à savoir une clé privée de traitement SK et une clé publique de traitement PK. Cette de clés de traitement peut être par exemple utilisée uniquement si la vérification de l'information secrète a permis de montrer que celle-ci correspond à l'information secrète enrôlée. Pour ce faire, l'étape d'envoi d'une indication du résultat de la vérification au dispositif client peut comprendre un certificat indiquant que l'information secrète a été vérifiée. Le certificat peut être générée sur le dispositif serveur à partir d'une preuve de la possession de la paire de clés de traitement (SK, PK) par le dispositif client. La preuve de la possession peut être générée par exemple au moyen d'une fonction mathématique et des paramètres suivants : la clé privée de traitement SK, la clé publique de traitement PK et l'indication selon laquelle l'information secrète a été vérifiée. Le certificat généré par le dispositif serveur peut comprendre une information relative à la durée de vie du certificat.

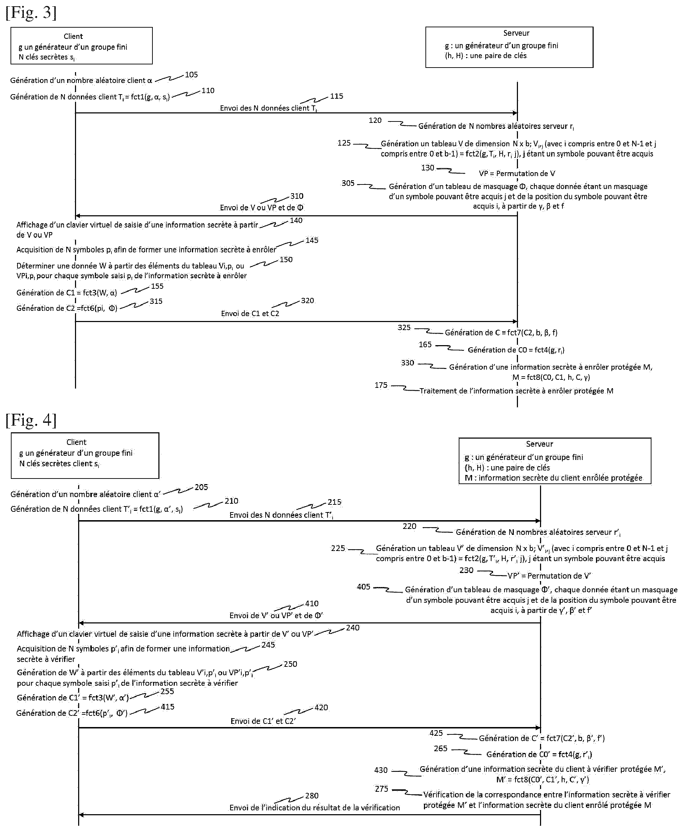

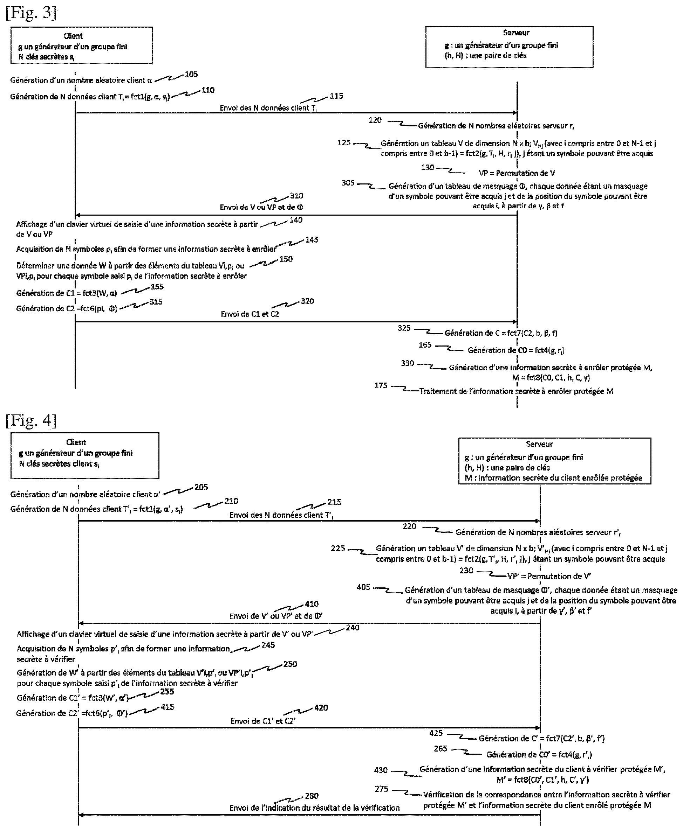

La [Fig.3] illustre un deuxième mode de réalisation d'un procédé d'enrôlement d'une information secrète mis en œuvre dans un dispositif client et un deuxième mode de réalisation d'un procédé d'enrôlement d'une information secrète mis en œuvre dans un dispositif serveur conformément à l'invention.

On ne décrira en détail ci-après que les étapes qui diffèrent de celles du premier mode de réalisation. Pour le reste, il est renvoyé au premier mode de réalisation décrit au support de la [Fig.1].

Dans ce mode de réalisation, le procédé d'enrôlement s'exécutant sur le dispositif serveur comprend en outre une étape de génération d'un tableau de masquage Φ de la position i de la pluralité de symboles pouvant être acquis, chaque donnée du tableau de masquage étant déterminée à partir d'un symbole pouvant être acquis j, de la position du symbole pouvant être acquis i, d'un premier nombre aléatoire de masquage γ pour masquer le symbole pouvant être acquis j et d'un deuxième et d'un troisième nombres aléatoires de masquage β, f pour masquer la position du symbole pouvant être acquis j (305).

Le tableau de masquage a pour objectif de cacher l'ordre d'acquisition des symboles formant l'information secrète et introduire des erreurs afin de masquer les symboles acquis.

Le tableau de masquage Φ est de dimension N par b, N étant la longueur de l'information secrète et b étant le nombre de symboles pouvant être acquis.

Selon un mode de réalisation particulier, le tableau de masquage est déterminé de la manière suivante : *ϕ*_{*i,π*(}*ⱼ₎ =* Π_{k≠j}F^{γⱼ}U^{βᵢ}| *j* ∈ [*b*], avec F = g^{f} et U étant un groupe d'ordre d'au moins 2^{L}, L étant un paramètre de sécurité.

L'étape 305 est suivie d'une étape d'envoi du tableau de données élémentaires codées V, VP et du tableau de masquage Φ du dispositif serveur au dispositif client (étape 310).

Le dispositif client réceptionne un tableau de masquage Φ provenant du dispositif serveur, chaque donnée du tableau de masquage étant un masquage d'un symbole pouvant être acquis j et de la position du symbole pouvant être acquis i.

Suite aux étapes 140 à 155 décrites précédemment au regard de la [Fig.1], une étape de génération d'une donnée de masquage partielle C2 à partir du tableau de masquage Φ, du symbole acquis j et de la position i du symbole acquis (étape 315) est réalisée. Selon un mode de réalisation particulier, la donnée de masquage partielle C2 peut être générée au moyen d'une fonction mathématique fct6, par exemple, la fonction mathématique suivante : ${C}_{2} = {\prod }_{i = 1}^{N} {ϕ}_{i , π \left({p}_{i}\right)}$.

L'étape 315 est suivie d'une étape d'envoi de l'information secrète à enrôler codée partielle C1 et de la donnée de masquage partielle C2 générée du dispositif client au dispositif serveur (étape 320).

Le dispositif serveur reçoit alors une information secrète à enrôler codée partielle C1 et une donnée de masquage partielle C2.

Le procédé se poursuit sur le dispositif serveur par une étape de génération d'une donnée de démasquage C à partir de la donnée de masquage partielle C2, du deuxième nombre aléatoire de masquage β, du troisième nombre aléatoire de masquage f et du nombre b de symboles pouvant être acquis (étape 325). Cette étape permet notamment de supprimer les erreurs introduites au moment de l'acquisition des symboles.

Selon un mode de réalisation particulier, la donnée de démasquage C peut être générée au moyen d'une fonction mathématique fct7, par exemple, au moyen de la fonction mathématique suivante : $C = {\left(\frac{{C}_{2}}{{U}^{βb}}\right)}^{\frac{1}{f}}$.

L'étape de génération d'une information secrète à enrôler protégée M à partir de l'information secrète à enrôler codée partielle C1, de la donnée de vérification partielle C0 et de la clé privée h est en outre réalisée à partir de la donnée de démasquage C et de la première donnée aléatoire de masquage γ (étape 330). Selon un mode de réalisation particulier, l'information secrète à enrôler protégée M peut être générée au moyen d'une fonction mathématique fct8, par exemple, au moyen de la fonction mathématique suivante : $M = \frac{{C}_{1} C}{{C}_{0}^{h} {g}^{γN}}$.

[Fig.4] illustre un deuxième mode de réalisation d'un procédé d'acquisition et de vérification d'une information secrète mis en œuvre dans un dispositif client et un deuxième mode de réalisation d'un procédé d'acquisition et de vérification d'une information secrète mis en œuvre dans un dispositif serveur, conformément à l'invention.

On ne décrira en détail ci-après que les étapes qui diffèrent de celles du premier mode de réalisation. Pour le reste, il est renvoyé au premier mode de réalisation décrit au support de la [Fig.2].

Dans ce mode de réalisation, le procédé d'acquisition et de vérification s'exécutant sur le dispositif serveur comprend une étape de génération d'un tableau de masquage Φ' de la position i de la pluralité de symboles pouvant être acquis, chaque donnée du tableau de masquage étant déterminée à partir d'un symbole pouvant être acquis j, de la position du symbole pouvant être acquis i, d'un premier nombre aléatoire de masquage γ' pour masquer le symbole pouvant être acquis j et d'un deuxième et d'un troisième nombres aléatoires de masquage β', f' pour masquer la position du symbole pouvant être acquis j (405).

Le tableau de masquage a pour objectif de cacher l'ordre d'acquisition des symboles formant l'information secrète et introduire des erreurs afin de masquer les symboles acquis.

Le tableau de masquage Φ' est de dimension N par b, N étant la longueur de l'information secrète et b étant le nombre de symboles pouvant être acquis.

Selon un mode de réalisation particulier, le tableau de masquage est déterminé de la manière suivante : *ϕ'*_{*i,π*(*j*)} *=* Π*_{k≠j}F'^{γ'ⱼ}U^{β'ᵢ}*|*j* ∈ [*b*]*,* avec F' = g^{f'} et U étant un groupe d'ordre d'au moins 2^{L}, L étant un paramètre de sécurité.

L'étape 405 est suivie d'une étape d'envoi du tableau de données élémentaires codées V', VP' et du tableau de masquage Φ' du dispositif serveur au dispositif client (étape 410).

Le dispositif client réceptionne un tableau de masquage Φ' provenant du dispositif serveur, chaque donnée du tableau de masquage étant un masquage d'un symbole pouvant être acquis j et de la position du symbole pouvant être acquis i.

Suite aux étapes 240 à 255 décrites précédemment au regard de la [Fig.2], une étape de génération d'une donnée de masquage partielle C2' à partir du tableau de masquage Φ', du symbole acquis j et de la position i du symbole acquis (étape 415) est réalisée. Selon un mode de réalisation particulier, la donnée de masquage partielle C2' peut être générée au moyen d'une fonction mathématique fct6, par exemple, la fonction mathématique suivante, précédemment décrite au regard de la [Fig.3] : ${C}_{2} ′ = {\prod }_{i = 1}^{N} ϕ {′}_{i , π \left(p{′}_{i}\right)} .$

L'étape 415 est suivie d'une étape d'envoi de l'information secrète à vérifier codée partielle C'1 et de la donnée de masquage partielle C2' générée du dispositif client au dispositif serveur (étape 420).

Le dispositif serveur reçoit alors une information secrète à vérifier codée partielle C1' et une donnée de masquage partielle C2'.

Le procédé se poursuit sur le dispositif serveur par une étape de génération d'une donnée de démasquage C' à partir de la donnée de masquage partielle C2', du deuxième nombre aléatoire de masquage β', du troisième nombre aléatoire de masquage f' et du nombre b de symboles pouvant être acquis (étape 425). Cette étape permet notamment de supprimer les erreurs introduites au moment de l'acquisition des symboles.

Selon un mode de réalisation particulier, la donnée de démasquage C' peut être générée au moyen d'une fonction mathématique fct7, par exemple, au moyen de la fonction mathématique suivante, précédemment décrite au regard de la [Fig.3] : $C ′ = {\left(\frac{{C}_{2} ′}{{U}^{β ′ b}}\right)}^{\frac{1}{f ′}} .$

L'étape de génération d'une information secrète à vérifier protégée M' à partir de l'information secrète à vérifier codée partielle C1', de la donnée de vérification partielle C0' et de la clé privée h est en outre réalisée à partir de la donnée de démasquage C' et de la première donnée aléatoire de masquage γ' (étape 430). Selon un mode de réalisation particulier, l'information secrète à vérifier protégée M' peut être générée au moyen d'une fonction mathématique fct8, par exemple, au moyen de la fonction mathématique suivante, précédemment décrite au regard de la [Fig.2] : $M ′ = \frac{{C}_{1} ′ C ′}{C {′}_{0}^{h} {g}^{γN}} .$

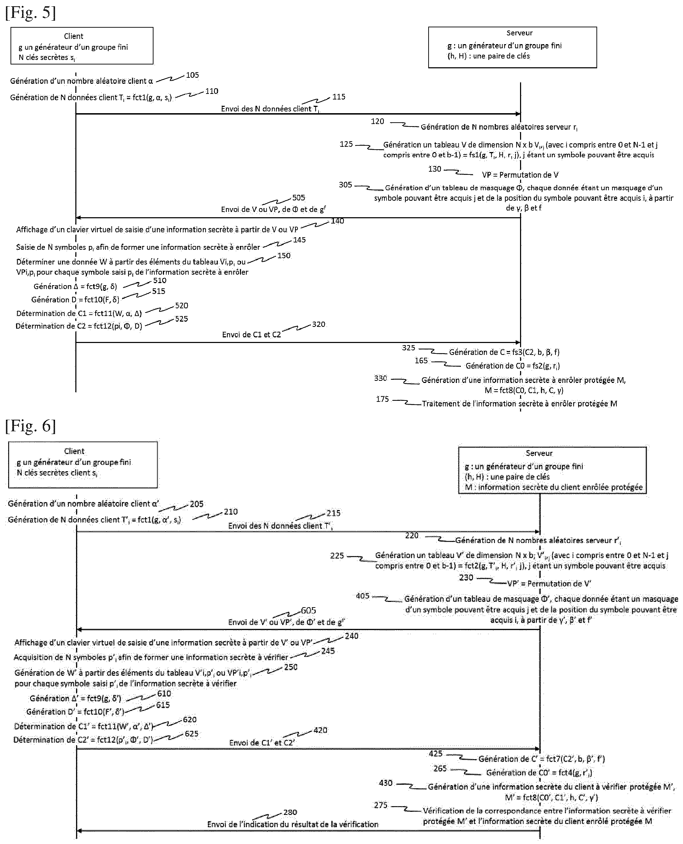

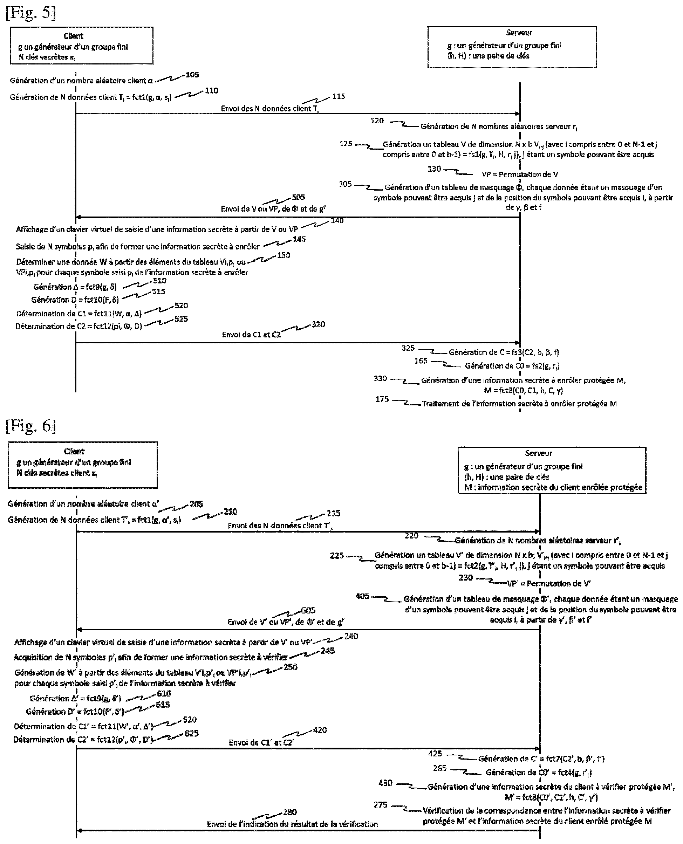

[Fig.5] illustre un troisième mode de réalisation d'un procédé d'enrôlement d'une information secrète mis en œuvre dans un dispositif client et un troisième mode de réalisation d'un procédé d'enrôlement d'une information secrète mis en œuvre dans un dispositif serveur conformément à l'invention.

On ne décrira en détail ci-après que les étapes qui diffèrent de celles du premier mode de réalisation et du deuxième mode de réalisation. Pour le reste, il est renvoyé au premier mode de réalisation décrit au support de la [Fig.1] et au deuxième mode de réalisation décrit au support de la [Fig.3].

Dans ce mode de réalisation, le procédé d'enrôlement s'exécutant sur le dispositif client comprend une étape de réception d'un paramètre de données serveur F (en complément du tableau de données élémentaires codées V, VP et du tableau de masquage Φ) provenant du dispositif serveur qui fait suite à l'envoi du paramètre de données serveur F par le dispositif serveur (étape 505). Le paramètre F est par exemple généré à partir du générateur g et peut être calculé selon la formule mathématique g^{f}.

Le procédé se poursuit sur le dispositif client par une étape de génération d'un nombre aléatoire de masquage client δ et par une étape de génération d'une première donnée de masquage client Δ à partir d'un générateur g d'un groupe fini et du nombre aléatoire de masquage client δ (étape 510). La première donnée de masquage client Δ peut être générée au moyen d'une fonction mathématique fct9, par exemple selon la formule mathématique g^{δ}.

L'étape 510 est suivie d'une étape de génération d'une seconde donnée de masquage client D à partir du paramètre de données serveur F et du nombre aléatoire de masquage client δ (étape 515). La seconde donnée de masquage client D peut être générée au moyen d'une fonction mathématique fct10, par exemple selon la formule mathématique F^{δ}.

L'étape de génération d'une information secrète à enrôler codée partielle C1 à partir de l'information secrète à enrôler codée W en utilisant le nombre aléatoire client α, précédemment décrite au regard de la [Fig.1] est en outre réalisée à partir de la première donnée de masquage client Δ (étape 520). La première donnée de masquage client Δ permet d'introduire côté client un aléa dans l'information secrète à enrôler codée partielle C1.

Selon un mode de réalisation particulier, l'information secrète à enrôler codée partielle C1 peut être générée au moyen d'une fonction mathématique fct11, par exemple, selon la formule mathématique : ${C}_{1} = \frac{W}{{g}^{Na}} Δ$.

L'étape de génération d'une donnée de masquage partielle C2 à partir du tableau de masquage Φ, du symbole acquis j et de la position i du symbole acquis, précédemment décrite au regard de la [Fig.3] est réalisée en outre à partir de la seconde donnée de masquage client D (étape 525). La seconde donnée de masquage client D permet d'introduire côté client un aléa supplémentaire dans la donnée de masquage partielle C2.

La première donnée de masquage client Δ et la seconde donnée de masquage client D seront supprimées dans le dispositif serveur, notamment lors de l'étape 330. En effet, selon un mode de réalisation particulier dans lequel l'information secrète à enrôler protégée M sera obtenue notamment au moyen d'une fonction mathématique comprenant en particulier la multiplication de C1 et C2, cela a pour effet de supprimer les aléas introduits par les données de masquage client.

Selon un mode de réalisation particulier, la donnée de masquage partielle C2 peut être générée au moyen d'une fonction mathématique fct12, par exemple, selon la formule mathématique : ${C}_{2} = D {\prod }_{i = 1}^{N - 1} {ϕ}_{i , π \left({p}_{i}\right)}$.

[Fig.6] illustre un troisième mode de réalisation d'un procédé d'acquisition et de vérification d'une information secrète mis en œuvre dans un dispositif client et un troisième mode de réalisation d'un procédé d'acquisition et de vérification d'une information secrète mis en œuvre dans un dispositif serveur, conformément à l'invention.

On ne décrira en détail ci-après que les étapes qui diffèrent de celles du premier mode de réalisation et du deuxième mode de réalisation. Pour le reste, il est renvoyé au premier mode de réalisation décrit au support de la [Fig.2] et au deuxième mode de réalisation décrit au support de la [Fig.4].

Dans ce mode de réalisation, le procédé d'acquisition et de vérification d'une information secrète s'exécutant sur le dispositif client comprend une étape de réception d'un paramètre de données serveur F' (en complément du tableau de données élémentaires codées V', VP' et du tableau de masquage Φ') provenant du dispositif serveur qui fait suite à l'envoi du paramètre de données serveur F' par le dispositif serveur (étape 605). Le paramètre F est par exemple généré à partir du générateur g et peut être calculé selon la formule mathématique g^{f'}.

Le procédé se poursuit sur le dispositif client par une étape de génération d'un nombre aléatoire de masquage client δ' et par une étape de génération d'une première donnée de masquage client Δ' à partir d'un générateur g d'un groupe fini et du nombre aléatoire de masquage client δ' (étape 610). La première donnée de masquage client Δ' peut être générée au moyen d'une fonction mathématique fct9 précédemment décrite au regard de la [Fig.5], par exemple selon la formule mathématique g^{δ'}.

L'étape 610 est suivie d'une étape de génération d'une seconde donnée de masquage client D' à partir du paramètre de données serveur F' et du nombre aléatoire de masquage client δ' (étape 615). La seconde donnée de masquage client D' peut être générée au moyen d'une fonction mathématique fct10 précédemment décrite au regard de la [Fig.5], par exemple selon la formule mathématique F'^{δ'}.

L'étape de génération d'une information secrète à enrôler codée partielle C1' à partir de l'information secrète à enrôler codée W' en utilisant le nombre aléatoire client α', précédemment décrite au regard de la [Fig.2] est en outre réalisée à partir de la première donnée de masquage client Δ' (étape 620). La première donnée de masquage client Δ' permet d'introduire côté client un aléa supplémentaire dans l'information secrète à enrôler codée partielle C1'.

Selon un mode de réalisation particulier, l'information secrète à enrôler codée partielle C1' peut être générée au moyen d'une fonction mathématique fct11 précédemment décrite au regard de la [Fig.5], par exemple, selon la formule mathématique : ${C}_{1} ′ = \frac{W ′}{{g}^{Na ′}} Δ ′$.

L'étape de génération d'une donnée de masquage partielle C2' à partir du tableau de masquage Φ', du symbole acquis j et de la position i du symbole acquis, précédemment décrite au regard de la [Fig.5] est réalisée en outre à partir de la seconde donnée de masquage client D' (étape 625). La seconde donnée de masquage client D' permet d'introduire côté client un aléa supplémentaire dans la donnée de masquage partielle.

La première donnée de masquage client Δ' et la seconde donnée de masquage client D' seront supprimées dans le dispositif serveur, notamment lors de l'étape 330. En effet, selon un mode de réalisation particulier dans lequel l'information secrète à enrôler protégée M sera obtenue notamment au moyen d'une fonction mathématique comprenant en particulier la multiplication de C1' et C2', cela a pour effet de supprimer les aléas introduits par les données de masquage client.

Selon un mode de réalisation particulier, la donnée de masquage partielle C2' peut être générée au moyen d'une fonction mathématique fct12 précédemment décrite au regard de la [Fig.5], par exemple, selon la formule mathématique : ${C}_{2} ′ = D ′ {\prod }_{i = 1}^{N - 1} ϕ {′}_{i , π \left({p}_{′ i}\right)} .$

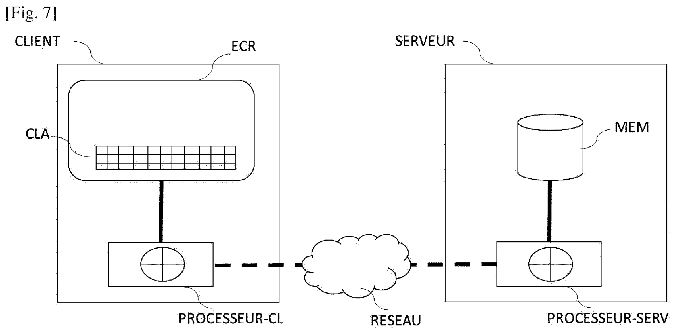

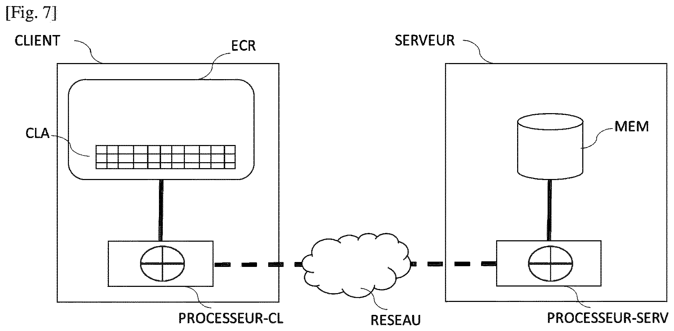

En référence à la [Fig.7], il est décrit la structure d'un dispositif client CLIENT et d'un dispositif serveur SERVEUR configurés pour mettre en œuvre les procédés objet de l'invention.

Le dispositif client CLIENT peut être tout type de dispositif, tel qu'un téléphone portable, une tablette, un ordinateur, etc., lequel comprend une plateforme matérielle et logicielle sur laquelle s'exécutent des logiciels, ces logiciels étant soit directement exécutables soit interprétés sur une machine virtuelle. Il comprend notamment des moyens de traitements PROCESSEUR-CL qui sont configurés pour mettre en œuvre les procédés d'enrôlement et d'acquisition et de vérification d'une information secrète conformément à l'invention.

Le dispositif serveur SERVEUR est un dispositif distant du dispositif client. Il comprend notamment des moyens de traitement PROCESSEUR-SERV qui sont configurés pour mettre en œuvre les procédés d'enrôlement et d'acquisition et de vérification d'une information secrète conformément à l'invention et de la mémoire de stockage MEM. La mémoire de stockage permet notamment de mémoriser une ou plusieurs informations secrètes M enrôlée.

Le dispositif client CLIENT comprend également des moyens d'interaction composés par exemple d'un moyen d'affichage ECR tel qu'un écran et d'un dispositif de saisie CLA tel qu'un clavier, le dispositif d'affichage ECR et le dispositif de saisie CLA pouvant être un même dispositif tel qu'un écran interactif tactile. Le dispositif d'affichage ECR comprend notamment des moyens d'affichage, notamment d'un clavier virtuel conformément à l'invention.

Enfin, le dispositif électronique CLIENT et le dispositif serveur SERVEUR peuvent comprendre des moyens de communication réseau par exemple, conformes à l'une quelconques des normes Ethernet, et/ou conformes à l'une quelconque des normes IEEE 802.11 (Wifi), et/ou conformes à une ou plusieurs normes de téléphonie mobile (2G, 3G, 4G, etc.).

## Revendications

1. Procédé d'enrôlement d'une information secrète (p) comprenant N symboles parmi une pluralité b de symboles pouvant être acquis, mis en œuvre dans un dispositif client, le dispositif client ayant une pluralité N de clés secrètes client (sᵢ),
le procédé comprend les étapes suivantes :
- génération d'un nombre aléatoire client (α) (105) ;
- génération de N données client (Tᵢ) à partir au moins du nombre aléatoire client (α) et de la pluralité N de clés secrètes client (sᵢ) (110) ;
- envoi des N données client (Tᵢ) à un dispositif serveur (115) ;
- réception d'un tableau de données élémentaires codées (V, VP) provenant dudit dispositif serveur, chaque donnée élémentaire (V_{i,j}, VP_{i,j}) codant un symbole pouvant être acquis (j) parmi la pluralité b de symboles pouvant être acquis, à une position i dans une information secrète pouvant être acquise ;
- affichage d'un clavier virtuel pour une acquisition d'une information secrète à enrôler, le clavier virtuel comprenant la pluralité b de symboles pouvant être acquis, les symboles étant affichées selon un ordre établi dans le tableau de données élémentaires codées (140) ;
- acquisition sur le clavier virtuel, de N symboles (pᵢ), les N symboles acquis (pi) formant une information secrète à enrôler (p) (145) ;
- génération d'une information secrète à enrôler codée (W) à partir des données élémentaires codées (V_{i,pi}) déterminées dans le tableau de données élémentaires codées pour chaque symbole acquis (pᵢ) formant l'information secrète à enrôler, en fonction du symbole acquis et de la position (i) de ce symbole dans l'information secrète à enrôler (p) (150) ;
- génération d'une information secrète à enrôler codée partielle (C1) à partir de l'information secrète à enrôler codée (W) en utilisant le nombre aléatoire client (α) (155) et
- envoi de l'information secrète à enrôler codée partielle (C1) au dispositif serveur (160) pour être enrôlée.

2. Procédé selon la revendication 1, **caractérisé en ce que** le tableau de données élémentaires codées est un tableau dont les éléments élémentaires ont été permutés afin que les données élémentaires codant les symboles pouvant être acquis j ne soient pas ordonnées et/ou l'information secrète à enrôler codée (W) est générée au moyen d'une fonction de multiplication des données élémentaires codées déterminées dans le tableau de données élémentaires codées (V, VP) pour chaque symbole acquis (pᵢ) formant l'information secrète à enrôler.

3. Procédé selon l'une quelconque des revendications précédentes, **caractérisé en ce que** le procédé comprend en outre :
- une étape de réception d'un identifiant d'utilisateur, d'une empreinte d'une information secrète à enrôler protégée et d'une signature provenant du dispositif serveur ; et
- une étape de mémorisation de l'identifiant d'utilisateur, de l'empreinte de l'information secrète à enrôler protégée et de signature afin d'enrôler l'information secrète.

4. Procédé selon l'une quelconque des revendications précédentes, **caractérisé en ce que** le procédé comprend en outre :
- une étape de réception d'un tableau de masquage (Φ) provenant du dispositif serveur, chaque donnée du tableau de masquage étant un masquage d'un symbole pouvant être acquis j et de la position du symbole pouvant être acquis i ;
- une étape de génération d'une donnée de masquage partielle (C2) à partir du tableau de masquage (Φ), du symbole acquis j et de la position i du symbole acquis (315) ;
- une étape d'envoi de la donnée de masquage partielle (C2) au dispositif serveur,
optionnellement, le procédé comprend en outre :
- une étape de réception d'un paramètre de données serveur (F) provenant du dispositif serveur ;
- une étape de génération d'un nombre aléatoire de masquage client (δ) ;
- une étape de génération d'une première donnée de masquage client (Δ) à partir d'un générateur (g) d'un groupe fini et du nombre aléatoire de masquage client (δ) ;
- une étape de génération d'une seconde donnée de masquage client (D) à partir du paramètre de données serveur (F) et du nombre aléatoire de masquage client (δ) ;
- l'étape de génération d'une information secrète à enrôler codée partielle (C1) est en outre réalisée à partir de la première donnée de masquage client (Δ) ; et
- l'étape de génération d'une donnée de masquage partielle (C2) est en outre réalisée à partir de la seconde donnée de masquage client (D).

5. Procédé d'enrôlement d'une information secrète (p) comprenant N symboles parmi une pluralité b de symboles pouvant être acquis, mis en œuvre dans un dispositif serveur, le dispositif serveur comprenant une paire de clés comprenant une clé privée (h) et une clé publique (H),
le procédé comprenant les étapes suivantes :
- réception de N données client (Tᵢ) provenant dudit dispositif client ;
- génération de N nombres aléatoires serveur (rᵢ) (120) ;
- génération d'un tableau de données élémentaires codées (V, VP), chaque donnée élémentaire codée (V_{i,j}, VP_{i,j}) étant une représentation codée d'un symbole pouvant être acquis j parmi la pluralité b de symboles pouvant être acquis, à une position i dans une information secrète pouvant être acquise, la donnée élémentaire codée (V_{i,j}, VP_{i,j}) étant en outre dépendante au moins de la donnée client (Tᵢ) à la position i, de la clé publique (H) et du i-ème nombre aléatoire serveur (rᵢ) généré (125) ;
- envoi du tableau de données élémentaires codées (V, VP) au dispositif client (135) ;
- réception d'une information secrète à enrôler codée partielle (C1) provenant du dispositif client ;
- génération d'une donnée de vérification partielle (C0) en fonction au moins des N nombres aléatoires serveur (rᵢ) (165) ;
- génération d'une information secrète à enrôler protégée (M) à partir de l'information secrète à enrôler codée partielle (C1), de la donnée de vérification partielle (C0) et de la clé privée (h) (170) ;
- traitement de l'information secrète à enrôler protégée (M) afin d'enrôler l'information secrète.

6. Procédé selon la revendication 5, **caractérisé en ce que** le procédé comprend en outre une étape de permutation des données élémentaires codées du tableau de données élémentaires codées pour obtenir un tableau de données élémentaires codées permuté (130).

7. Procédé selon l'une quelconque des revendications 5 à 6, **caractérisé en ce que** le traitement de l'information secrète à enrôler protégée (M) comprend une mémorisation de l'information secrète à enrôler protégée (M) afin d'enrôler l'information secrète.

8. Procédé selon l'une quelconque des revendications 5 à 6, **caractérisé en ce que** le dispositif serveur comprend en outre une clé privée de hachage (Ks) et une clé privée de signature (SKs), et **en ce que** le traitement de l'information secrète à enrôler protégée (M) comprend :
- une étape de génération d'une empreinte de l'information secrète à enrôler protégée (M) à partir d'une fonction de hachage cryptographique, de la clé privée de hachage (Ks) et de l'information secrète à enrôler protégée (M) ;
- une étape de génération d'une signature à partir de la clé privée de signature (SKs), d'un identifiant d'un utilisateur et de l'empreinte générée ;
- une étape d'envoi au dispositif client, de l'identifiant de l'utilisateur, de l'empreinte générée et de la signature générée, afin d'enrôler l'information secrète.

9. Procédé selon l'une quelconque des revendications 5 à 8, **caractérisé en ce que** le procédé comprend en outre :
- une étape de génération d'un tableau de masquage (Φ), chaque donnée du tableau de masquage étant déterminée à partir d'un symbole pouvant être acquis j, de la position du symbole pouvant être acquis i, d'un premier nombre aléatoire de masquage (γ) pour masquer le symbole pouvant être acquis j et d'un deuxième nombre aléatoire de masquage (β) et d'un troisième nombre aléatoire de masquage (f) pour masquer la position du symbole pouvant être acquis j (305) ;
- une étape d'envoi du tableau de masquage (Φ) au dispositif client ;
- une étape de réception d'une donnée de masquage partielle (C2) provenant du dispositif client ;
- une étape de génération d'une donnée de démasquage (C) à partir de la donnée de masquage partielle (C2), du deuxième nombre aléatoire de masquage (β), du troisième nombre aléatoire de masquage (f) et du nombre b de symboles pouvant être acquis ;
- l'étape de génération d'une information secrète à enrôler protégée (M) est en outre réalisée à partir de la donnée de démasquage (C) et de la première donnée aléatoire de masquage (γ).

10. Procédé d'acquisition et de vérification d'une information secrète (p') comprenant N symboles parmi une pluralité b de symboles pouvant être acquis, mis en œuvre dans un dispositif client, le dispositif client ayant une pluralité N de clés secrètes client (sᵢ),
le procédé comprend les étapes suivantes :
- génération d'un nombre aléatoire client (α') (205) ;
- génération de N données client (T'ᵢ) à partir au moins du nombre aléatoire client (α') et de la pluralité N de clés secrètes client (sᵢ) (210) ;
- envoi des N données client (T'ᵢ) à un dispositif serveur (215) ;
- réception d'un tableau de données élémentaires codées (V', VP') provenant dudit dispositif serveur, chaque donnée élémentaire (V'_{i,j}, VP'_{i,j}) codant un symbole pouvant être acquis (j) parmi la pluralité b de symboles pouvant être acquis, à une position i dans une information secrète pouvant être acquise ;
- affichage d'un clavier virtuel pour une acquisition d'une information secrète à vérifier, le clavier virtuel comprenant la pluralité b de symboles pouvant être acquis, les symboles étant affichées selon un ordre établi dans le tableau de données élémentaires codées (240) ;
- acquisition sur le clavier virtuel, de N symboles (p'ᵢ), les N symboles acquis (p'i) formant l'information secrète à vérifier (p') (245) ;
- génération d'une information secrète à vérifier codée (W') à partir des données élémentaires codées (V'_{i,pi}, VP'_{i,pi}) déterminées dans le tableau de données élémentaires codées pour chaque symbole acquis (p'ᵢ) formant l'information secrète à vérifier, en fonction du symbole acquis et de la position (i) de ce symbole dans l'information secrète à vérifier (p') (250) ;
- génération d'une information secrète à vérifier codée partielle (C1') à partir de l'information secrète à vérifier codée (W') en utilisant le nombre aléatoire client (α') (255) ;
- envoi de l'information secrète à vérifier codée partielle (C1') au dispositif serveur (260) pour être vérifiée et
- réception d'une indication comprenant un résultat de la vérification en provenance du dispositif serveur.

11. Procédé selon la revendication 10, **caractérisé en ce que** le tableau de données élémentaires codées est un tableau dont les éléments élémentaires ont été permutés afin que les données élémentaires codant les symboles pouvant être acquis j ne soient pas ordonnées et/ou l'information secrète à vérifier codée (W') est générée au moyen d'une fonction de multiplication des données élémentaires déterminées dans le tableau de données élémentaires codées (V', VP') pour chaque symbole acquis (p'ᵢ) formant l'information secrète à vérifier.

12. Procédé selon l'une quelconque des revendications 10 à 11, **caractérisé en ce que** le dispositif client comprend en outre un identifiant d'utilisateur, une empreinte d'une information secrète enrôlée protégée et une signature, et **en ce que** le procédé comprend en outre, une étape d'envoi de l'identifiant d'utilisateur, de l'empreinte d'une information secrète enrôlée protégée et de la signature au dispositif serveur.

13. Procédé selon l'une quelconque des revendications 10 à 12, **caractérisé en ce que** le procédé comprend en outre :
- une étape de réception d'un tableau de masquage (Φ') provenant du dispositif serveur, chaque donnée du tableau de masquage étant un masquage d'un symbole pouvant être acquis j et de la position du symbole pouvant être acquis i ;
- une étape de génération d'une donnée de masquage partielle (C2') à partir du tableau de masquage (Φ'), du symbole acquis j et de la position i du symbole acquis (415) ;
- une étape d'envoi de la donnée de masquage partielle (C2') au dispositif serveur,
optionnellement, le procédé comprend en outre :
- une étape de réception d'un paramètre de données serveur (F') provenant du dispositif serveur ;
- une étape de génération d'un nombre aléatoire de masquage client (δ') ;
- une étape de génération d'une première donnée de masquage client (Δ') à partir d'un générateur (g) d'un groupe fini et du nombre aléatoire de masquage client (δ') ;
- une étape de génération d'une seconde donnée de masquage client (D') à partir du paramètre de données serveur (F') et du nombre aléatoire de masquage client (δ') ;
- l'étape de génération d'une information secrète à vérifier codée partielle (C1') est en outre réalisée à partir de la première donnée de masquage client (Δ') ; et
- l'étape de génération d'une donnée de masquage partielle (C2') est en outre réalisée à partir de la seconde donnée de masquage client (D').

14. Procédé d'acquisition et de vérification d'une information secrète (p') comprenant N symboles parmi une pluralité b de symboles pouvant être acquis, mis en œuvre dans un dispositif serveur, le dispositif serveur comprenant une paire de clés comprenant une clé privée (h) et une clé publique (H),
le procédé comprenant les étapes suivantes :
- réception de N données client (T'ᵢ) provenant dudit dispositif client ;
- génération de N nombres aléatoires serveur (r'ᵢ) (220) ;
- génération d'un tableau de données élémentaires codées (V', VP'), chaque donnée élémentaire codée (V'_{i,j}, VP'_{i,j}) étant une représentation codée d'un symbole pouvant être acquis j parmi la pluralité b de symboles pouvant être acquis, à une position i dans une information secrète pouvant être acquise, la donnée élémentaire codée (V'_{i,j}, VP'_{i,j}) étant en outre dépendante au moins de la donnée client (T'ᵢ) à la position i, de la clé publique (H) et du i-ème nombre aléatoire serveur (r'ᵢ) généré (225) ;
- envoi du tableau de données élémentaires codées (V', VP') au dispositif client (235) ;
- réception d'une information secrète à vérifier codée partielle (C1') provenant du dispositif client ;
- génération d'une donnée de vérification partielle (C0') en fonction au moins des N nombres aléatoires serveur (r'ᵢ) (265) ;
- génération d'une information secrète à vérifier protégée (M') à partir de l'information secrète à vérifier codée partielle (C1'), de la donnée de vérification partielle (C0') et de la clé privée (h) (270) ;
- vérification de la correspondance entre l'information secrète à vérifier protégée (M') et une information secrète enrôlée protégée (M), sans avoir accès à l'information secrète à vérifier protégée (M') (275) ; et
- envoi d'une indication comprenant un résultat de la vérification au dispositif client.

15. Procédé selon la revendication 14, **caractérisé en ce que** le procédé comprend en outre une étape de permutation des données élémentaires codées du tableau de données élémentaires codées pour obtenir un tableau de données élémentaires codées permuté (230).

16. Procédé selon l'une quelconque des revendications 13 à 14, **caractérisé en ce que** le dispositif serveur comprend en outre une clé privée de hachage (Ks) et une clé publique de signature (PKs), et **en ce que** le procédé comprend en outre :
- une étape de réception d'un identifiant d'utilisateur, d'une empreinte d'une information secrète enrôlée protégée et d'une signature provenant du dispositif client ;
- une étape de vérification de la signature à partir de la clé publique de signature (PKs) et
- l'étape de vérification de la correspondance entre l'information secrète à vérifier protégée (M') et l'information secrète enrôlée protégée (M) comprend une étape de génération d'une empreinte de l'information secrète à vérifier protégée (M') à partir d'une fonction de hachage cryptographique, de la clé privée de hachage (Ks) et de l'information secrète à vérifier protégée (M') et une étape de comparaison de la correspondance entre l'empreinte de l'information secrète à vérifier protégée et l'empreinte de l'information secrète enrôlée protégée.

17. Procédé selon l'une quelconque des revendications 13 à 16, **caractérisé en ce que** le procédé comprend en outre :
- une étape de génération d'un tableau de masquage (Φ'), chaque donnée du tableau de masquage étant déterminée à partir d'un symbole pouvant être acquis j, de la position du symbole pouvant être acquis i, d'un premier nombre aléatoire de masquage (γ') pour masquer le symbole pouvant être acquis j et d'un deuxième nombre aléatoire de masquage (β') et d'un troisième nombre aléatoire de masquage (f') pour masquer la position du symbole pouvant être acquis j (405) ;
- une étape d'envoi du tableau de masquage (Φ') au dispositif client ;
- une étape de réception d'une donnée de masquage partielle (C2') provenant du dispositif client ;
- une étape de génération d'une donnée de démasquage (C') à partir de la donnée de masquage partielle (C2'), du deuxième nombre aléatoire de masquage (β'), du troisième nombre aléatoire de masquage (f') et du nombre b de symboles pouvant être acquis ;
- l'étape de génération d'une information secrète à vérifier protégée (M') est en outre réalisée à partir de la donnée de démasquage (C') et de la première donnée aléatoire de masquage (γ').

18. Dispositif configuré pour mettre en œuvre le procédé selon l'une quelque des revendications 1 à 4 ou le procédé selon l'une quelconque des revendications 5 à 9 ou le procédé selon l'une quelconque des revendications 10 à 13 ou le procédé selon l'une quelconque des revendications 14 à 17.

## Patentansprüche

1. Verfahren zum Registrieren einer geheimen Information (p) umfassend N Symbole aus einer Vielzahl b erwerbbarer Symbole, die in einer Client-Vorrichtung implementiert sind, wobei die Client-Vorrichtung eine Vielzahl N geheimer Client-Schlüssel (sᵢ) aufweist,
wobei das Verfahren folgende Schritte umfasst:
- Generieren einer Client-Zufallszahl (α) (105);
- Generieren von N Client-Daten (Tᵢ) aus mindestens der Client-Zufallszahl (α) und der Vielzahl N geheimer Client-Schlüssel (sᵢ) (110);
- Senden der N Client-Daten (Tᵢ) an eine Server-Vorrichtung (115);
- Empfangen einer kodierten elementaren Datentabelle (V, VP) von der Server-Vorrichtung, wobei jeder elementare Datensatz (V_{i,j}, VP_{i,j}) ein erwerbbares Symbol (j) aus der Vielzahl b erwerbbarer Symbole an einer Position i in einer erwerbbaren geheimen Information kodiert;
- Anzeigen einer virtuellen Tastatur zum Erwerben einer zu registrierenden geheimen Information, wobei die virtuelle Tastatur die Vielzahl b erwerbbarer Symbole umfasst, wobei die Symbole in einer in der kodierten elementaren Datentabelle (140) festgelegten Reihenfolge angezeigt werden;
- Erwerben auf der virtuellen Tastatur, von N Symbolen (pᵢ), wobei die N erworbenen Symbole (pᵢ) eine zu registrierende geheime Information bilden (p) (145);
- Generieren einer zu registrierenden kodierten geheimen Information (W) auf Grundlage der in der kodierten elementaren Datentabelle bestimmten kodierten elementaren Daten (Vᵢ,ₚᵢ) für jedes erworbene Symbol (pᵢ), das die zu registrierende geheime Information bildet, in Abhängigkeit von dem erworbenen Symbol und der Position (i) dieses Symbol in der zu registrierenden geheimen Information (p) (150);
- Generieren einer teilweise zu registrierenden kodierten geheimen Information (C1) auf Grundlage der kodierten zu registrierenden geheimen Information (W) unter Verwendung der Client-Zufallszahl (α) (155) und
- Senden der teilweise zu registrierenden kodierten geheimen Information (C1) an die Server-Vorrichtung (160), um sie zu registrieren.

2. Verfahren nach Anspruch 1, **dadurch gekennzeichnet, dass** die kodierte elementare Datentabelle eine Tabelle ist, deren elementare Elemente so permutiert wurden, dass die elementaren Daten, die die erwerbbaren Symbole j kodieren, nicht geordnet sind, und/oder die zu registrierende kodierte geheime Information (W) mithilfe einer Multiplikationsfunktion der in der kodierten elementaren Datentabelle (V, VP) bestimmten kodierten elementaren Daten für jedes erworbene Symbol (pᵢ) generiert wird, das die zu registrierende geheime Information bildet.

3. Verfahren nach einem der vorstehenden Ansprüche, **dadurch gekennzeichnet, dass** das Verfahren ferner umfasst:
- einen Schritt des Empfangens einer Benutzerkennung, eines Fingerabdrucks einer geschützten, zu registrierenden geheimen Information und einer Signatur von der Server-Vorrichtung; und
- einen Schritt des Speicherns der Benutzerkennung, des Fingerabdrucks der geschützten, zu registrierenden geheimen Information und der Signatur, um die geheime Information zu registrieren.

4. Verfahren nach einem der vorstehenden Ansprüche, **dadurch gekennzeichnet, dass** das Verfahren ferner umfasst:
- einen Schritt des Empfangens einer Maskierungstabelle (Φ) von der Server-Vorrichtung, wobei jeder Datensatz der Maskierungstabelle eine Maskierung eines erwerbbaren Symbols j und der Position des erwerbbaren Symbols i ist;
- einen Schritt des Generierens eines Teilmaskierungsdatensatzes (C2) auf Grundlage der Maskierungstabelle (Φ), des erworbenen Symbols j und der Position i des erworbenen Symbols (315);
- einen Schritt des Sendens des Teilmaskierungsdatensatzes (C2) an die Server-Vorrichtung,
wahlweise, umfasst das Verfahren ferner:
- einen Schritt des Empfangens eines Serverdatenparameters (F) ausgehend von der Server-Vorrichtung;
- einen Schritt des Generierens einer Zufallszahl der Client-Maskierung (δ);
- einen Schritt des Generierens eines ersten Client-Maskierungsdatensatzes (Δ) auf Grundlage eines Generators (g) einer endlichen Gruppe und der Client-Maskierungszufallszahl (δ);
- einen Schritt des Generierens eines zweiten Client-Maskierungsdatensatzes (D) aus dem Serverdatenparameter (F) und der Client-Maskierungszufallszahl (δ);
- der Schritt des Generierens einer teilweise zu registrierenden kodierten geheimen Information (C1) wird ferner auf Grundlage der ersten Client-Maskierungsdatensatzes (Δ) ausgeführt; und
- der Schritt des Generierens eines Teilmaskierungsdatensatzes (C2) wird ferner auf Grundlage des zweiten Client-Maskierungsdatensatzes (D) ausgeführt.

5. Verfahren zum Registrieren einer geheimen Information (p) umfassend N Symbole aus einer Vielzahl b erwerbbarer Symbole, die in einer Server-Vorrichtung implementiert sind, wobei die Server-Vorrichtung ein Schlüsselpaar umfasst, das einen privaten Schlüssel (h) und einen öffentlichen Schlüssel (H) umfasst,
wobei das Verfahren folgende Schritte umfasst:
- Empfangen von N Client-Daten (Tᵢ ) von der Client-Vorrichtung;
- Generieren von N Server-Zufallszahlen (rᵢ) (120);
- Generieren einer kodierten elementaren Datentabelle (V, VP), wobei jeder kodierte elementare Datensatz (V_{i,j}, V_{i,j}) eine kodierte Darstellung eines erwerbbaren Symbols j aus der Vielzahl b erwerbbarer Symbole ist,
an einer Position i in einer erwerbbaren geheimen Information, wobei der kodierte elementare Datensatz (V_{i,j}, V_{i,j}) ferner mindestens von dem Client-Datensatz (Tᵢ) an Position i, dem öffentlichen Schlüssel (H) und der generierten i-ten Serverzufallszahl (rᵢ) abhängig ist (125);
- Senden der kodierten elementaren Datentabelle (V, VP) an die Client-Vorrichtung (135);
- Empfangen einer teilweise zu registrierenden kodierten geheimen Information (C1) von der Client-Vorrichtung;
- Generieren eines Teilprüfdatensatzes (C0) in Abhängigkeit von mindestens den N Server-Zufallszahlen (rᵢ) (165);
- Generieren einer geschützten, zu registrierenden geheimen Information (M) aus der teilweise zu registrierenden kodierten geheimen Information (C1), dem Teilprüfdatensatz (C0) und dem privaten Schlüssel (h) (170);
- Verarbeiten der geschützten, zu registrierenden geheimen Information (M), um die geheime Information zu registrieren.

6. Verfahren nach Anspruch 5, **dadurch gekennzeichnet, dass** das Verfahren ferner einen Schritt zum Permutieren der kodierten elementaren Daten der kodierten elementaren Datentabelle umfasst, um eine permutierte Tabelle kodierter elementarer Daten (130) zu erhalten.

7. Verfahren nach einem der Ansprüche 5 bis 6, **dadurch gekennzeichnet, dass** das Verarbeiten der geschützten, zu registrierenden geheimen Information (M) ein Speichern der geschützten, zu registrierenden geheimen Information (M) zum Registrieren der geheimen Information umfasst.

8. Verfahren nach einem der Ansprüche 5 bis 6, **dadurch gekennzeichnet, dass** die Server-Vorrichtung ferner einen privaten Hash-Schlüssel (Ks) und einen privaten Signatur-Schlüssel (SKs) umfasst, und dass die Verarbeitung der geschützten, zu registrierenden geheimen Information (M) Folgendes umfasst:
- einen Schritt zum Generieren eines Fingerabdrucks der geheimen, zu registrierenden geschützten Information (M) aus einer kryptographischen Hash-Funktion, dem privaten Hash-Schlüssel (Ks) und der geheimen, zu registrierenden geschützten Information (M);
- einen Schritt zum Generieren einer Signatur aus dem privaten Signatur-Schlüssel (SKs), einer Benutzerkennung und dem generierten Fingerabdruck;
- einen Schritt des Sendens der Benutzerkennung, des generierten Fingerabdrucks und der generierten Signatur an die Client-Vorrichtung, um die geheimen Informationen zu registrieren.

9. Verfahren nach einem der Ansprüche 5 bis 8, **dadurch gekennzeichnet, dass** das Verfahren ferner umfasst:
- einen Schritt des Generierens einer Maskierungstabelle (Φ), wobei jeder Datensatz der Maskierungstabelle aus einem erwerbbaren Symbol j, der Position des erwerbbaren Symbols i, einer ersten Maskierungszufallszahl (*γ*), zum Maskieren des erwerbbaren Symbols j und einer zweiten Maskierungszufallszahl (β) und einer dritten Maskierungszufallszahl (f) zum Maskieren der Position des erwerbbaren Symbols j (305) bestimmt wird;
- einen Schritt des Sendens der Maskierungstabelle (Φ) an die Client-Vorrichtung;
- einen Schritt des Empfangens einer Teilmaskierungsinformation (C2) von der Client-Vorrichtung;
- einen Schritt des Generierens eines Entmaskierungsdatensatzes (C) aus dem Teilmaskierungsdatensatz (C2), der zweiten Maskierungszufallszahl (β), der dritten Maskierungszufallszahl (f) und der Anzahl b erwerbbarer Symbole;
- der Schritt des Generierens einer geschützten, zu registrierenden geheimen Information (M) wird ferner auf Grundlage des Entmaskierungsdatensatzes (C) und des ersten Zufalls-Maskierungsdatensatzes (*γ*) ausgeführt.

10. Verfahren zum Erwerben und zum Überprüfen einer geheimen Information (p'), umfassend N Symbole aus einer Vielzahl b erwerbbarer Symbole, die in einer Client-Vorrichtung implementiert sind, wobei die Client-Vorrichtung eine Vielzahl N geheimer Client-Schlüssel (sᵢ) aufweist,
wobei das Verfahren folgende Schritte umfasst:
- Generieren einer Client-Zufallszahl (α') (205);
- Generieren von N Client-Daten (T'ᵢ) auf der Grundlage mindestens der Client-Zufallszahl (α') und der Vielzahl N der geheimen Client-Schlüssel (sᵢ) (210)
- Senden der N Client-Daten (T'ᵢ) an eine Server-Vorrichtung (215);
- Empfangen einer von der Server-Vorrichtung stammenden kodierten elementaren Datentabelle (V', VP'), wobei jeder elementare Datensatz (V'_{i,j}, VP'_{i,j}) ein erwerbbares Symbol (j) aus der Vielzahl b erwerbbarer Symbole an einer Position i in einer erwerbbaren geheimen Information kodiert;
- Anzeigen einer virtuellen Tastatur zum Erwerben einer zu überprüfenden geheimen Information, wobei die virtuelle Tastatur die Vielzahl b von erwerbbaren Symbolen umfasst, wobei die Symbole in einer in der kodierten elementaren Datentabelle (240) festgelegten Reihenfolge angezeigt werden;
- Erwerben, auf der virtuellen Tastatur, von N Symbolen (p'ᵢ), wobei die N erworbenen Symbole (p'ᵢ) die zu überprüfende geheime Information (p') (245) bilden;
- Generieren einer zu überprüfenden geheimen Information (W') aus den in der kodierten elementaren Datentabelle (V'_{i,pi}, VP'_{i,pi}) bestimmten kodierten elementaren Daten für jedes erworbene Symbol (p'ᵢ), das die zu überprüfende geheime Information bildet, in Abhängigkeit vom erworbenen Symbol und der Position (i) dieses Symbols in der zu überprüfenden geheimen Information (p') (250);
- Generieren einer teilweise zu überprüfenden geheimen kodierten Information (C1') aus der zu überprüfenden geheimen kodierten Information (W') unter Verwendung der Client-Zufallszahl (α') (255);
- Senden der teilweise zu überprüfenden kodierten geheimen Information (C1') an die Server-Vorrichtung (260) zur Überprüfen und
- Empfangen einer Angabe, die ein Ergebnis der Überprüfung von der Server-Vorrichtung umfasst.

11. Verfahren nach Anspruch 10, **dadurch gekennzeichnet, dass** die kodierte elementare Datentabelle eine Tabelle ist, deren elementare Elemente so permutiert wurden, dass die elementaren Daten, die die erwerbbaren Symbole kodieren j, nicht geordnet sind und/oder, dass die zu überprüfende kodierte geheime Information (W') mithilfe einer Multiplikationsfunktion der in der kodierten elementaren Datentabelle (V', VP') bestimmten elementaren Daten für jedes erworbene Symbol (p'ᵢ), das die zu überprüfende geheime Information bildet, generiert wird.

12. Verfahren nach einem der Ansprüche 10 bis 11, **dadurch gekennzeichnet, dass** die Client-Vorrichtung ferner eine Benutzerkennung, einen Fingerabdruck einer geschützten registrierten geheimen Information und eine Signatur umfasst, und dass das Verfahren ferner einen Schritt des Sendens der Benutzerkennung, des Fingerabdrucks einer geschützten registrierten geheimen Information und der Signatur an die Server-Vorrichtung umfasst.

13. Verfahren nach einem der Ansprüche 10 bis 12, **dadurch gekennzeichnet, dass** das Verfahren ferner umfasst:
- einen Schritt des Empfangens einer Maskierungstabelle (Φ') von der Server-Vorrichtung, wobei jeder Datensatz der Maskierungstabelle eine Maskierung eines erwerbbaren Symbols j und der Position des erwerbbaren Symbols i ist;
- einen Schritt des Generierens eines Teilmaskierungsdatensatzes (C2') aus der Maskierungstabelle (Φ'), dem erworbenen Symbol j und der Position i des erworbenen Symbols (415);
- einen Schritt des Sendens des Teilmaskierungsdatensatzes (C2') an die Server-Vorrichtung,
wahlweise, umfasst das Verfahren ferner:
- einen Schritt des Empfangens eines Serverdatenparameters (F') von der Server-Vorrichtung;
- einen Schritt des Generierens einer Zufallszahl der Client-Maskierung (δ');
- einen Schritt des Generierens eines ersten Client-Maskierungsdatensatzes (Δ') aus einem Generator (g) einer endlichen Gruppe und der Client-Maskierungszufallszahl (δ');
- einen Schritt des Generierens eines zweiten Client-Maskierungsdatensatzes (D') aus dem Serverdatenparameter (F') und der Client-Maskierungszufallszahl (δ');
- der Schritt des Generierens einer teilweise zu überprüfenden kodierten geheimen Information (C1') wird ferner auf Grundlage des ersten Client-Maskierungsdatensatzes (Δ') ausgeführt; und
- der Schritt zum Generieren eines Teilmaskierungsdatensatzes (C2') wird ferner auf Grundlage des zweiten Client-Maskierungsdatensatzes (D') ausgeführt.

14. Verfahren zum Erwerben und zum Überprüfen einer geheimen Information (p'), umfassend N Symbole aus einer Vielzahl b erwerbbarer Symbole, die in einer Server-Vorrichtung implementiert sind, wobei die Server-Vorrichtung ein Schlüsselpaar umfasst, das einen privaten Schlüssel (h) und einen öffentlichen Schlüssel (H) umfasst,
wobei das Verfahren folgende Schritte umfasst:
- Empfangen von N Client-Daten (T'ᵢ) von der Client-Vorrichtung;
- Generieren von N Server-Zufallszahlen (r'ᵢ) (220);
- Generieren einer kodierten elementaren Datentabelle (V', VP'), wobei jeder kodierte elementare Datensatz (V'_{i,j}, VP'_{i,j}) eine kodierte Darstellung eines erwerbbaren Symbols j aus der Vielzahl b erwerbbarer Symbole ist,
an einer Position i in einer erwerbbaren geheimen Information, wobei der kodierte elementare Datensatz (V'_{i,j},VP'_{i,j}) ferner mindestens von dem Client-Datensatz (T'ᵢ) an Position i, dem öffentlichen Schlüssel (H) und der generierten i-ten Serverzufallszahl (r'ᵢ) (225) abhängig ist;
- Senden der kodierten elementaren Datentabelle (V', VP') an die Client-Vorrichtung (235);
- Empfangen einer geheimen, zu überprüfenden, teilweise kodierten Information (C1') ausgehend von der Client-Vorrichtung;
- Generieren eines Teilprüfdatensatzes (C0') in Abhängigkeit von mindestens den N Serverzufallszahlen (r'ᵢ) (265);
- Generieren einer geschützten, zu überprüfenden geheimen Information (M') aus der teilweise zu überprüfenden kodierten geheimen Information (C1'), des Teilprüfdatensatzes (C0') und dem privaten Schlüssel (h) (270);
- Überprüfen der Übereinstimmung zwischen der geschützten, zu überprüfenden geheimen Information (M') und einer geschützten, registrierten geheimen Information (M), ohne Zugriff auf die geschützte, zu überprüfende geheime Information (M') (275); und
- Senden einer Angabe, die ein Ergebnis der Überprüfung an die Client-Vorrichtung umfasst.

15. Verfahren nach Anspruch 14, **dadurch gekennzeichnet, dass** das Verfahren ferner einen Schritt zum Permutieren der kodierten elementaren Datentabelle kodierter elementarer Daten umfasst, um eine permutierte Tabelle kodierter elementarer Daten (230) zu erhalten.

16. Verfahren nach einem der Ansprüche 13 bis 14, **dadurch gekennzeichnet, dass** die Server-Vorrichtung ferner einen privaten Hash-Schlüssel (Ks) und einen öffentlichen Signatur-Schlüssel (PKs) umfasst, und dass das Verfahren ferner Folgendes umfasst:
- einen Schritt des Empfangens einer Benutzerkennung, eines Fingerabdrucks einer geschützten, registrierten geheimen Information und einer Signatur von der Client-Vorrichtung;
- einen Schritt zum Überprüfen der Signatur anhand des öffentlichen Signatur-Schlüssels (PKs) und
- der Schritt des Überprüfens der Übereinstimmung zwischen der geschützten, zu überprüfenden geheimen Information (M') und der geschützten, registrierten geheimen Information (M) umfasst einen Schritt des Generierens eines Fingerabdrucks der geschützten, zu überprüfenden geheimen Information (M') auf Grundlage einer kryptografischen Hash-Funktion, des privaten Hash-Schlüssels (Ks) und der zu überprüfenden geschützten geheimen Information (M') und einem Schritt des Vergleichens der Übereinstimmung zwischen dem Fingerabdruck der zu überprüfenden geschützten geheimen Information und dem Fingerabdruck der geschützten registrierten geheimen Information.

17. Verfahren nach einem der Ansprüche 13 bis 16, **dadurch gekennzeichnet, dass** das Verfahren ferner umfasst:
- einen Schritt des Generierens einer Maskierungstabelle (Φ'), wobei jeder Datensatz der Maskierungstabelle auf Grundlage eines erwerbbaren Symbols j, der Position des erwerbbaren Symbols i, einer ersten Zufalls-Maskierungszahl (γ') zum Maskieren des erwerbbaren Symbols j und einer zweiten Zufalls-Maskierungszahl (β') und einer dritten Zufalls-Maskierungszahl (f') zum Maskieren der Position des erwerbbaren Symbols j (405) bestimmt wird;
- einen Schritt des Sendens der Maskierungstabelle (Φ') an die Client-Vorrichtung;
- einen Schritt des Empfangens eines Teilmaskierungsdatensatzes (C2') von der Client-Vorrichtung;
- einen Schritt des Generierens eines Entmaskierungsdatensatzes (C') aus dem Teilmaskierungsdatensatz (C2'), der zweiten Maskierungszufallszahl (β'), der dritten Maskierungszufallszahl (f') und der Anzahl b der erwerbbaren Symbole;
- der Schritt des Generierens einer geschützten, zu überprüfenden geheimen Information (M') wird ferner auf Grundlage des Entmaskierungsdatensatzes (C') und des ersten Zufalls-Maskierungsdatensatzes (γ') ausgeführt.

18. Vorrichtung, die zum Durchführen des Verfahrens nach einem der Ansprüche 1 bis 4 oder des Verfahrens nach einem der Ansprüche 5 bis 9 oder des Verfahrens nach einem der Ansprüche 10 bis 13 oder des Verfahrens nach einem der Ansprüche 14 bis 17 ausgebildet ist.

## Claims

1. Method for enrolling secret information (p) comprising N symbols from a plurality b of acquirable symbols, executed in a client device, the client device having a plurality N of client secret keys (sᵢ),
the method comprises the following steps
- generating a client random number (α) (105);
- generating N client data items (Tᵢ) from at least the client random number (α) and from the plurality of N client secret keys (sᵢ) (110)
- sending the N client data items (Tᵢ) to a server device (115);
- receiving a table of encoded elementary data (V, VP) from said server device, each elementary data item (V_{i,j}, VP_{i,j}) encoding an acquirable symbol (j) from the plurality b of acquirable symbols, at a position i in acquirable secret information;
- displaying a virtual keypad for acquiring secret information to be enrolled, the virtual keypad comprising the plurality b of acquirable symbols, the symbols being displayed according to an order established in the table of encoded elementary data (140);
- acquiring on the virtual keypad N symbols (pᵢ), the N acquired symbols (pi) forming secret information to be enrolled (p) (145);
- generating encoded secret information to be enrolled (W) from the encoded elementary data (Vᵢ,ₚᵢ) determined in the table of encoded elementary data for each acquired symbol (pᵢ) forming the secret information to be enrolled, according to the acquired symbol and the position (i) of this symbol in the secret information to be enrolled (p) (150);
- generating partial encoded secret information to be enrolled (C1) from the encoded secret information to be enrolled (W) by using the client random number (α) (155) and
- sending the partial encoded secret information to be enrolled (C1) to the server device (160) for enrolment.

2. Method according to claim 1, **characterised in that** the table of encoded elementary data is a table whose elementary elements have been permuted so that the elementary data encoding the acquirable symbols j are not ordered and/or the encoded secret information to be enrolled (W) is generated by means of a function of multiplying the encoded elementary data determined in the table of encoded elementary data (V, VP) for each acquired symbol (pᵢ) forming the secret information to be enrolled.

3. Method according to any one of the preceding claims, **characterised in that** the method further comprises:
- a step of receiving a user identifier, a hashcode of protected secret information to be enrolled and a signature from the server device; and
- a step of storing the user identifier, the hashcode of the protected secret information to be enrolled and signature in order to enrol the secret information.

4. Method according to any one of the preceding claims,
**characterised in that** the method further comprises:
- a step of receiving a masking table (Φ) from the server device, each data item in the masking table being a masking of an acquirable symbol j and of the position of the acquirable symbol i;
- a step of generating partial masking data (C2) from the masking table (Φ), the acquired symbol j, and the position i of the acquired symbol (315);
- a step of sending the partial masking data (C2) to the server device,
optionally, the method further comprises:
- a step of receiving a server data parameter (F) from the server device;
- a step of generating a client masking random number (δ);
- a step of generating a first client masking data item (Δ) from a generator (g) of a finite group and the client masking random number (δ);
- a step of generating a second client masking data item (D) from the server data parameter (F) and the client masking random number (δ);
- the step of generating partial encoded secret information to be enrolled (C1) is moreover performed using the first client masking data item (Δ); and
- the step of generating partial masking data item (C2) is further carried out using the second client masking data item (D).

5. Method for enrolling secret information (p) comprising N symbols from a plurality b of acquirable symbols, executed in a server device, the server device comprising a pair of keys comprising a private key (h) and a public key (H), the method comprising the following steps:
- receiving N client data items (Tᵢ) from said client device;
- generating N server random numbers (rᵢ) (120);
- generating a table of encoded elementary data (V, VP), each encoded elementary data item (Vᵢ,ⱼ, V_{i,j}) being an encoded representation of an acquirable symbol j from the plurality b of acquirable symbols, at a position i in acquirable secret information, the encoded elementary data (Vᵢ,ⱼ, V_{i,j}) being further dependent at least on the client data (Tᵢ) at the position i, on the public key (H) and on the i-th server random number (rᵢ) generated (125);
- sending the table of encoded elementary data (V, VP) to the client device (135);
- receiving partial encoded secret information to be enrolled (C1) from the client device;
- generating a partial verification data item (C0) according to at least the N server random numbers (rᵢ) (165);
- generating protected secret information to be enrolled (M) from the partial encoded secret information to be enrolled (C1), the partial verification data (C0) and the private key (h) (170);
- processing the protected secret information to be enrolled (M) in order to enrol the secret information.

6. Method according to claim 5, **characterised in that** the method further comprises a step of permuting the encoded elementary data of the table of encoded elementary data to obtain a table of permuted encoded elementary data (130).

7. Method according to any one of claims 5 to 6, **characterised in that** processing the protected secret information to be enrolled (M) comprises storing the protected secret information to be enrolled (M) in order to enrol the secret information.

8. Method according to any one of claims 5 to 6, **characterised in that** the server device further comprises a private hash key (Ks) and a private signature key (SKs), and **in that** processing the protected secret information to be enrolled (M) comprises:
- a step of generating a hashcode of the protected secret information to be enrolled (M) using a cryptographic hash function, the private hash key (Ks) and the protected secret information to be enrolled (M);
- a step of generating a signature from the signature private key (SKs), a user identifier and the generated hashcode;
- a step of sending, to the client device, the user identifier, the generated hashcode and the generated signature, in order to enrol the secret information.

9. Method according to any one of claims 5 to 8, **characterised in that** the method further comprises:
- a step of generating a masking table (Φ), each data item of the masking table being determined from an acquirable symbol j, from the position of the acquirable symbol i, from a first masking random number (γ) for masking the acquirable symbol j and from a second masking random number (β) and a third masking random number (f) for masking the position of the acquirable symbol j (305);
- a step of sending the masking table (Φ) to the client device;
- a step of receiving partial masking data (C2) from the client device;
- a step of generating unmasking data (C) from the partial masking data (C2), from the second masking random number (β), from the third masking random number (f) and from the number b of acquirable symbols;
- the step of generating protected secret information to be enrolled (M) is moreover performed using the unmasking data (C) and the first masking random data (γ).

10. Method for acquiring and verifying secret information (p') comprising N symbols from a plurality b of acquirable symbols, executed in a client device, the client device having a plurality N of client secret keys (sᵢ),
the method comprises the following steps:
- generating a client random number (α') (205);
- generating N client data items (T'ᵢ) from at least the client random number (α') and the plurality of N client secret keys (sᵢ) (210)
- sending the N client data items (T'ᵢ) to a server device (215);
- receiving a table of encoded elementary data (V', VP') from said server device, each elementary data item (V'_{i,j}, VP'_{i,j}) encoding an acquirable symbol (j) from the plurality b of acquirable symbols, at a position i in acquirable secret information;
- displaying a virtual keypad for acquiring secret information to be verified, the virtual keypad comprising the plurality b of acquirable symbols, the symbols being displayed according to an order established in the table of encoded elementary data (240);
- acquiring, on the virtual keypad, N symbols (p'ᵢ), the N acquired symbols (p'ᵢ) forming the secret information to be verified (p') (245);
- generating encoded secret information to be verified (W') from the encoded elementary data (V'_{i,pi}, VP'_{i,pi}) determined in the table of encoded elementary data for each acquired symbol (p'ᵢ) forming the secret information to be verified, depending on the acquired symbol and the position (i) of this symbol in the secret information to be verified (p') (250);
- generating partial encoded secret information to be verified (C1') from the encoded secret information to be verified (W') by using the client random number (α') (255);
- sending the partial encoded secret information to be verified (C1') to the server device (260) for verification and
- receiving an indication comprising a result of the verification from the server device.

11. Method according to claim 10, **characterised in that** the table of encoded elementary data is a table whose elementary elements have been permuted so that the elementary data encoding the acquirable symbols j are not ordered and/or the coded secret information to be verified (W') is generated by means of a multiplication function of the elementary data determined in the table of coded elementary data (V', VP') for each acquired symbol (p'ᵢ) forming the secret information to be verified.

12. Method according to any one of claims 10 to 11, **characterised in that** the client device further comprises a user identifier, a hashcode of protected enrolled secret information and a signature, and **in that** the method further comprises a step of sending the user identifier, the hashcode of protected enrolled secret information and the signature to the server device.

13. Method according to any one of claims 10 to 12, **characterised in that** the method further comprises:
- a step of receiving a masking table (Φ') from the server device, each data item of the masking table being a masking of an acquirable symbol j and of the position of the acquirable symbol i;
- a step of generating partial masking data (C2') from the masking table (Φ'), the acquired symbol j and the position i of the acquired symbol (415);
- a step of sending the partial masking data (C2') to the server device,
optionally, the method further comprises:
- a step of receiving a server data parameter (F') from the server device;
- a step of generating a client masking random number (δ');
- a step of generating a first client masking data item (Δ') from a generator (g) of a finite group and the client masking random number (δ');
- a step of generating a second client masking data item (D') from the server data parameter (F') and the client masking random number (δ');
- the step of generating partial encoded secret information to be verified (C1') is further carried out using the first client masking data item (Δ'); and
- the step of generating partial masking data (C2') is moreover performed using the second client masking data item (D').

14. Method for acquiring and verifying secret information (p') comprising N symbols from a plurality b of acquirable symbols, executed in a server device, the server device comprising a pair of keys comprising a private key (h) and a public key (H),
the method comprising the following steps:
- receiving N client data items (T'ᵢ) from said client device;
- generating N server random numbers (r'ᵢ) (220);
- generating a table of encoded elementary data (V', VP'), each encoded elementary data item (V'_{i,j}, VP'_{i,j}) being an encoded representation of an acquirable symbol j from the plurality b of acquirable symbols, at a position i in acquirable secret information, the encoded elementary data item (V'_{i,j}, VP'_{i,j}) being further dependent at least on the client data (T'ᵢ) at the position i, on the public key (H) and on the i-th server random number (r'ᵢ) generated (225);
- sending the table of encoded elementary data (V', VP') to the client device (235);
- receiving partial encoded secret information to be verified (C1') from the client device;
- generating a partial verification data item (C0') according to at least the N server random numbers (r'ᵢ) (265);
- generating protected secret information to be verified (M') from the partial encoded secret information to be verified (C1'), from the partial verification data item (C0') and from the private key (h) (270);
- verifying the match between the protected secret information to be verified (M') and protected enrolled secret information (M), without having access to the protected secret information to be verified (M') (275); and
- sending an indication comprising a result of the verification to the client device.

15. Method according to claim 14, **characterised in that** the method further comprises a step of permuting the encoded elementary data of the table of encoded elementary data to obtain a permuted encoded elementary data table (230).

16. Method according to any one of claims 13 to 14, **characterised in that** the server device further comprises a private hash key (Ks) and a public signature key (PKs), and **in that** the method further comprises:
- a step of receiving a user identifier, a hashcode of protected enrolled secret information and a signature from the client device;
- a step of verifying the signature using the public signature key (PKs) and
- the step of verifying the match between the protected secret information to be verified (M') and the protected enrolled secret information (M) comprises a step of generating a hashcode of the protected secret information to be verified (M') from a cryptographic hash function, from the private hash key (Ks) and from the protected secret information to be verified (M'), and a step of comparing the match between the hashcode of the protected secret information to be verified and the hashcode of the protected enrolled secret information.

17. Method according to any one of claims 13 to 16, **characterised in that** the method further comprises:
- a step of generating a masking table (Φ'), each data item of the masking table being determined from an acquirable symbol j, from the position of the acquirable symbol i, from a first masking random number (γ') to mask the acquirable symbol j and from a second masking random number (β') and a third masking random number (f') to mask the position of the acquirable symbol j (405);
- a step of sending the masking table (Φ') to the client device;
- a step of receiving a partial masking data item (C2') from the client device;
- a step of generating an unmasking data item (C') from the partial masking data item (C2'), from the second masking random number (β'), from the third masking random number (f') and from the number b of acquirable symbols;
- the step of generating protected secret information to be verified (M') is moreover performed using the unmasking data item (C') and the first random masking data item (γ').

18. Device configured to execute the method according to any one of claims 1 to 4 or the method according to any one of claims 5 to 9 or the method according to any one of claims 10 to 13 or the method according to any one of claims 14 to 17.
